# EUROPEAN PATENT APPLICATION

(11) **EP 2 897 036 A2**
(43) Date of publication of application: **22.07.2015**
(21) Application number: 14196013.8
(22) Date of filing: 03.12.2014
(51) Int. Cl.: G06F 3/0488, G06F 3/0354

(54) **Mobile terminal and method for controlling the same**

(30) Priority: 17.01.2014 KR 20140006145
(71) Applicant: LG Electronics Inc., Yeongdeungpo-gu Seoul 150-721 (KR)
(72) Inventor: Yim, Soyeon, 137-893 Seoul (KR); You, Kyungjin, 137-893 Seoul (KR); Kim, Jonghoon, 137-893 Sepul (KR); Choi, Jinhae, 137-893 Seoul (KR)
(74) Representative: Cabinet Plasseraud

(57) **Abstract**

A mobile terminal including a wireless communication unit configured to provide wireless communication; a display unit; and a controller configured to display a handwriting region on the display unit for receiving handwriting, search for data corresponding to the handwriting input in the handwriting region, and execute a corresponding application on the mobile terminal corresponding to the searched data.

## Description

### BACKGROUND OF THE INVENTION

### 1. Field of the Invention

The present invention relates to a mobile terminal in which an application can be controlled based on a touch input applied to a display unit.

### 2. Background of the Invention

Recently, a massive amount of information is stored as various applications are driven in mobile terminals, and information items may be applied to various applications. Thus, in order to drive applications based on information, users have to undergo various stages to search for information and drive applications, causing inconvenience to the user.

### SUMMARY OF THE INVENTION

Accordingly, one aspect of the present invention is to address the above-noted and other problems with the related art.

Another aspect of the present invention is to provide an interface in which the user can write a word to perform a particular application on the mobile terminal.

To achieve these and other advantages and in accordance with the purpose of this specification, as embodied and broadly described herein, a mobile terminal includes: a display unit configured to define a handwriting region; a touch sensing unit configured to sense a touch input applied to the handwriting region; and a controller configured to extract a word corresponding to the handwriting input, search for data corresponding to the word, and drive an application to which the data is applied.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate embodiments and together with the description serve to explain the principles of the invention.

In the drawings:

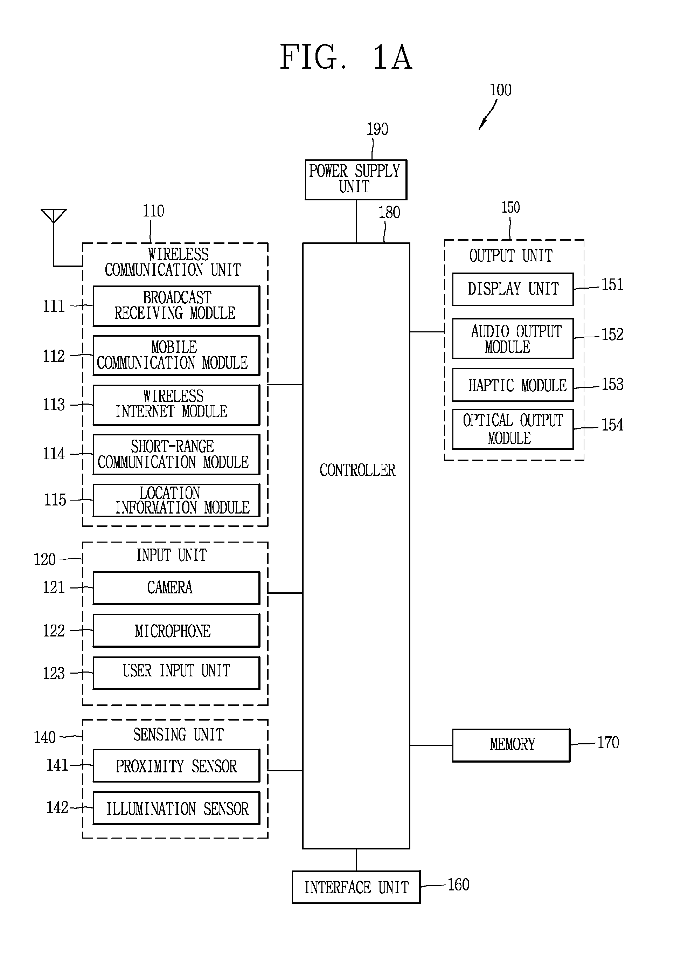

FIG. 1A is a block diagram of a mobile terminal according to an embodiment of the present invention.
FIGS. 1 Band 1C are conceptual views of one example of the mobile terminal, viewed from different directions.
FIG. 2 is a flow chart illustrating a method for controlling a mobile terminal according to an embodiment of the present invention.
FIGS. 3A through 3C are conceptual views illustrating the control method of FIG. 2 according to various examples when a display unit is in a deactivated state.
FIGS. 3D(a) through 3E(d) are conceptual views illustrating the control method of FIG. 2 according to various examples when a display unit is in a deactivated state.
FIGS. 4A through 4B are conceptual views illustrating a touch sensing unit sensing a handwriting input.
FIGS. 4C(a) through 4F(b) are conceptual views illustrating a touch sensing unit sensing a handwriting input.
FIGS. 5A through 5E(d) are conceptual vies illustrating a method for controlling a mobile terminal using a tap applied in a deactivated state of the display unit.
FIGS. 6A(a) through 6B(d) are conceptual views illustrating a control method of executing an application based on a handwriting input when a mobile terminal is in a locked state.
FIG. 7 is a conceptual view illustrating an embodiment of storing a key image.
FIGS. 8A and 8B are conceptual views illustrating a control method of an application by a handwriting input when an event is received.
FIGS. 9(a) through 9(d) are conceptual views illustrating a control method of playing media based on a handwriting input.
FIG 10 is a conceptual view illustrating a control method of storing schedule data based on a handwriting input.
FIGS. 11A through 11C are conceptual views illustrating a control method of a mobile terminal with a cover unit installed thereon.
FIGS. 12A through 12D(d) are conceptual vies illustrating a method for controlling an address list application based on a handwriting input.
FIGS. 13A(a) through 13I(d) are conceptual views illustrating a control method of outputting a handwriting window or defining a handwriting region according to various embodiments of the present invention.
FIGS. 14(a) through 14(d) are conceptual views illustrating a control method of a handwriting window based on a handwriting input.

### DETAILED DESCRIPTION OF THE INVENTION

Hereinafter, an embodiment disclosed in the present invention will be described in detail with reference to the accompanying drawings. For the sake of brief description with reference to the drawings, the same or equivalent components will be provided with the same reference numbers, and description thereof will not be repeated. A suffix "module" and "unit" used for constituent elements disclosed in the following description is merely intended for easy description of the specification, and the suffix itself does not give any special meaning or function.

The accompanying drawings are used to help easily understand the technical idea of the present invention and it should be understood that the idea of the present invention is not limited by the accompanying drawings. The idea of the present invention should be construed to extend to any alterations, equivalents and substitutes besides the accompanying drawings.

Although the terms first, second, etc. may be used herein to describe various elements, these elements should not be limited by these terms. These terms are only used to distinguish one element from another. When an element is referred to as being "connected with" another element, the element can be directly connected with the other element or intervening elements may also be present. In contrast, when an element is referred to as being "directly connected with" another element, there are no intervening elements present.

A singular representation may include a plural representation as far as it represents a definitely different meaning from the context. Terms 'include' or 'has' used herein should be understood that they are intended to indicate an existence of several components or several steps, disclosed in the specification, and it may also be understood that part of the components or steps may not be included or additional components or steps may further be included.

Mobile terminals described herein may include cellular phones, smart phones, laptop computers, digital broadcasting terminals, personal digital assistants (PDAs), portable multimedia players (PMPs), navigators, slate PCs, tablet PCs, ultra books, wearable devices (for example, smart watches, smart glasses, head mounted displays (HMDs)), and the like. However, the configuration according to the embodiments of this specification can also be applied to stationary terminals such as digital TV, desktop computers and the like, excluding a case of being applicable only to the mobile terminals.

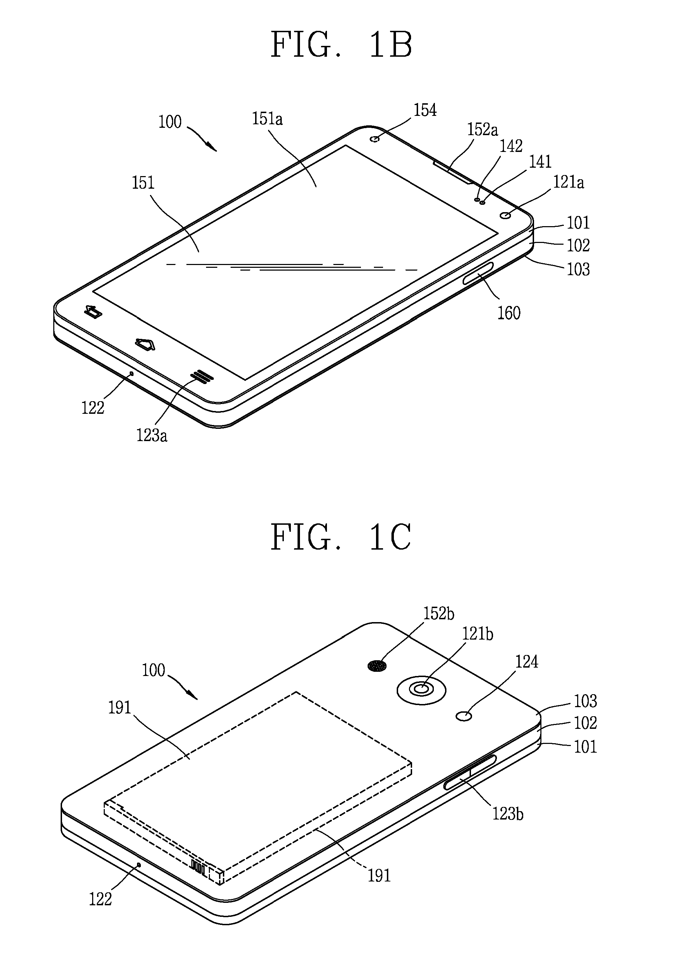

Referring to FIGS. 1A through 1C, FIG. 1A is a block diagram of a mobile terminal in accordance with an embodiment of the present invention, FIGS. 1B and 1C are conceptual views of one example of the mobile terminal, viewed from different directions.

The mobile terminal 100 may include components, such as a wireless communication unit 110, an input unit 120, a sensing unit 140, an output unit 150, an interface unit 160, a memory 170, a controller 180, a power supply unit 190 and the like. FIG. 1A illustrates the mobile terminal having various components, but implementing all of the illustrated components is not a requirement. Greater or fewer components may alternatively be implemented.

In more detail, the wireless communication unit 110 may typically include one or more modules which permit wireless communications between the mobile terminal 100 and a wireless communication system, between the mobile terminal 100 and another mobile terminal 100, or between the mobile terminal 100 and a network within which another mobile terminal 100 (or an external server) is located. For example, the wireless communication unit 110 may include at least one of a broadcast receiving module 111, a mobile communication module 112, a wireless Internet module 113, a short-range communication module 114, a location information module 115 and the like.

The input unit 120 may include a camera 121 for inputting an image signal, a microphone 122 or an audio input module for inputting an audio signal, or a user input unit 123 (for example, a touch key, a push key (or a mechanical key), etc.) for allowing a user to input information. Audio data or image data collected by the input unit 120 may be analyzed and processed by a user's control command.

The sensing unit 140 may include at least one sensor which senses at least one of internal information of the mobile terminal, a surrounding environment of the mobile terminal and user information. For example, the sensing unit 140 may include a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, refer to the camera 121), a microphone 122, a battery gage, an environment sensor (for example, a barometer, a hygrometer, a thermometer, a radiation detection sensor, a thermal sensor, a gas sensor, etc.), and a chemical sensor (for example, an electronic nose, a health care sensor, a biometric sensor, etc.). Further, the mobile terminal disclosed herein may utilize information in such a manner of combining information sensed by at least two sensors of those sensors.

The output unit 150 may be configured to output an audio signal, a video signal or a tactile signal. The output unit 150 may include a display unit 151, an audio output module 152, a haptic module 153, an optical output module 154 and the like. The display unit 151 can have an inter-layered structure or an integrated structure with a touch sensor so as to implement a touch screen. The touch screen may provide an output interface between the mobile terminal 100 and a user, as well as functioning as the user input unit 123 which provides an input interface between the mobile terminal 100 and the user.

The interface unit 160 may serve as an interface with various types of external devices connected with the mobile terminal 100. The interface unit 160, for example, may include wired or wireless headset ports, external power supply ports, wired or wireless data ports, memory card ports, ports for connecting a device having an identification module, audio input/output (I/O) ports, video I/O ports, earphone ports, or the like. The mobile terminal 100 may execute an appropriate control associated with a connected external device, in response to the external device being connected to the interface unit 160.

Furthermore, the memory 170 may store a plurality of application programs (or applications) executed in the mobile terminal 100, data for operations of the mobile terminal 100, instruction words, and the like. At least some of those application programs may be downloaded from an external server via wireless communication. Some others of those application programs may be installed within the mobile terminal 100 at the time of being shipped for basic functions of the mobile terminal 100 (for example, receiving a call, placing a call, receiving a message, sending a message, etc.). Further, the application programs may be stored in the memory 170, installed in the mobile terminal 100, and executed by the controller 180 to perform an operation (or a function) of the mobile terminal 100.

The controller 180 can typically control an overall operation of the mobile terminal 100 in addition to the operations associated with the application programs. The controller 180 can provide or process information or functions appropriate for a user by processing signals, data, information and the like, which are input or output by the aforementioned components, or activating the application programs stored in the memory 170.

Furthermore, the controller 180 can control at least part of the components illustrated in FIG. 1, in order to drive the application programs stored in the memory 170. In addition, the controller 180 can drive the application programs by combining at least two of the components included in the mobile terminal 100 for operation.

The power supply unit 190 may receive external power or internal power and supply appropriate power required for operating respective elements and components included in the mobile terminal 100 under the control of the controller 180. The power supply unit 190 may include a battery, and the battery may be an embedded battery or a replaceable battery.

At least part of those elements and components may be combined to implement operation and control of the mobile terminal or a control method of the mobile terminal according to various embodiments described herein. Also, the operation and control or the control method of the mobile terminal may be implemented in the mobile terminal in such a manner of activating at least one application program stored in the memory 170.

Hereinafter, each aforementioned component will be described in more detail with reference to FIG. 1A, prior to explaining various embodiments implemented by the mobile terminal 100 having the configuration. First, the wireless communication unit 110 will be described. The broadcast receiving module 111 of the wireless communication unit 110 may receive a broadcast signal and/or broadcast associated information from an external broadcast managing entity via a broadcast channel. The broadcast channel may include a satellite channel and a terrestrial channel. At least two broadcast receiving modules 111 may be provided in the mobile terminal 100 to simultaneously receive at least two broadcast channels or switch the broadcast channels.

The mobile communication module 112 may transmit/receive wireless signals to/from at least one of network entities, for example, a base station, an external mobile terminal, a server, and the like, on a mobile communication network, which is constructed according to technical standards or transmission methods for mobile communications (for example, Global System for Mobile Communication (GSM), Code Division Multi Access (CDMA), Wideband CDMA (WCDMA), High Speed Downlink Packet Access (HSDPA), High Speed Uplink Packet Access (HSUPA), Long Term Evolution (LTE), Long Term Evolution-Advanced (LTE-A), etc.) Here, the wireless signals may include audio call signal, video (telephony) call signal, or various formats of data according to transmission/reception of text/multimedia messages.

The wireless Internet module 113 denotes a module for wireless Internet access. This module may be internally or externally coupled to the mobile terminal 100. The wireless Internet module 113 may transmit/receive wireless signals via communication networks according to wireless Internet technologies. Examples of such wireless Internet access may include Wireless LAN (WLAN), Wireless Fidelity (Wi-Fi) Direct, Digital Living Network Alliance (DLNA), Wireless Broadband (Wibro), Worldwide Interoperability for Microwave Access (Wimax), High Speed Downlink Packet Access (HSDPA), High Speed Uplink Packet Access (HSUPA), Long Term Evolution (LTE), Long Term Evolution-Advanced (LTE-A), and the like. The wireless Internet module 113 may transmit/receive data according to at least one wireless Internet technology within a range including even Internet technologies which are not aforementioned.

From the perspective that the wireless Internet accesses according to Wibro, HSDPA, GSM, CDMA, WCDMA, LET and the like are executed via a mobile communication network, the wireless Internet module 113 which performs the wireless Internet access via the mobile communication network may be understood as a type of the mobile communication module 112.

The short-range communication module 114 denotes a module for short-range communications. Suitable technologies for implementing the short-range communications may include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, and the like. The short-range communication module 114 may support wireless communications between the mobile terminal 100 and a wireless communication system, between the mobile terminal 100 and another mobile terminal 100, or between the mobile terminal and a network where another mobile terminal 100 (or an external server) is located, via wireless personal area networks.

Here, the another mobile terminal 100 may be a wearable device, for example, a smart watch, a smart glass or a head mounted display (HMD), which can exchange data with the mobile terminal 100 (or to cooperate with the mobile terminal 100). The short-range communication module 114 may sense (recognize) a wearable device, which can communicate with the mobile terminal), near the mobile terminal 100. In addition, when the sensed wearable device is a device which is authenticated to communicate with the mobile terminal 100 according to an embodiment of the present invention, the controller 180 can transmit at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 denotes a module for detecting or calculating a position of the mobile terminal. An example of the location information module 115 may include a Global Position System (GPS) module or a Wi-Fi module. For example, when the mobile terminal uses the GPS module, a position of the mobile terminal may be acquired using a signal sent from a GPS satellite. As another example, when the mobile terminal uses the Wi-Fi module, a position of the mobile terminal may be acquired based on information related to a wireless access point (AP) which transmits or receives a wireless signal to or from the Wi-Fi module. According to the need, the location information module 115 may perform any function of the other modules of the wireless communication unit 110 to obtain data for the location of the mobile terminal in a substitutional or additional manner. The location information module 115 may be a module used to obtain the location (or current location) of the mobile terminal, and may not be necessarily limited to a module for directly calculating or obtaining the location of the mobile terminal.

Next, the input unit 120 may be configured to provide an audio or video signal (or information) input to the mobile terminal or information input by a user to the mobile terminal. For the input of the audio information, the mobile terminal 100 may include one or a plurality of cameras 121. The camera 121 may process image frames of still pictures or video obtained by image sensors in a video call mode or a capture mode. The processed image frames may be displayed on the display unit 151. Further, the plurality of cameras 121 disposed in the mobile terminal 100 may be arranged in a matrix configuration. By use of the cameras 121 having the matrix configuration, a plurality of image information having various angles or focal points may be input into the mobile terminal 100. Also, the plurality of cameras 121 may be arranged in a stereoscopic structure to acquire a left image and a right image for implementing a stereoscopic image.

The microphone 122 may process an external audio signal into electric audio data. The processed audio data may be utilized in various manners according to a function being executed in the mobile terminal 100 (or an application program being executed). Further, the microphone 122 may include assorted noise removing algorithms to remove noise generated in the course of receiving the external audio signal.

The user input unit 123 may receive information input by a user. When information is input through the user input unit 123, the controller 180 can control an operation of the mobile terminal 100 to correspond to the input information. The user input unit 123 may include a mechanical input element (or a mechanical key, for example, a button located on a front/rear surface or a side surface of the mobile terminal 100, a dome switch, a jog wheel, a jog switch, etc.), and a touch-sensitive input means. As one example, the touch-sensitive input means may be a virtual key, a soft key or a visual key, which is displayed on a touch screen through software processing, or a touch key which is disposed on a portion except for the touch screen. Further, the virtual key or the visual key may be displayable on the touch screen in various shapes, for example, graphic, text, icon, video or a combination thereof.

Further, the sensing unit 140 may sense at least one of internal information of the mobile terminal, surrounding environment information of the mobile terminal and user information, and generate a sensing signal corresponding to it. The controller 180 can control an operation of the mobile terminal 100 or execute data processing, a function or an operation associated with an application program installed in the mobile terminal based on the sensing signal. Hereinafter, description will be given in more detail of representative sensors of various sensors which may be included in the sensing unit 140.

First, the proximity sensor 141 refers to a sensor to sense presence or absence of an object approaching to a surface to be sensed, or an object disposed near a surface to be sensed, by using an electromagnetic field or infrared rays without a mechanical contact. The proximity sensor 141 may be arranged at an inner region of the mobile terminal covered by the touch screen, or near the touch screen. The proximity sensor 141 may have a longer lifespan and a more enhanced utility than a contact sensor.

The proximity sensor 141, for example, may include a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and so on. When the touch screen is implemented as a capacitance type, the proximity sensor 141 may sense proximity of a pointer to the touch screen by changes of an electromagnetic field, which is responsive to an approach of an object with conductivity. In this instance, the touch screen (touch sensor) may be categorized into a proximity sensor.

Further, for the sake of brief explanation, a status that the pointer is positioned to be proximate onto the touch screen without contact will be referred to as 'proximity touch,' whereas a status that the pointer substantially comes in contact with the touch screen will be referred to as 'contact touch.' For the position corresponding to the proximity touch of the pointer on the touch screen, such position will correspond to a position where the pointer faces perpendicular to the touch screen upon the proximity touch of the pointer. The proximity sensor 141 may sense proximity touch, and proximity touch patterns (e.g., distance, direction, speed, time, position, moving status, etc.). Further, the controller 180 can process data (or information) corresponding to the proximity touches and the proximity touch patterns sensed by the proximity sensor 141, and output visual information corresponding to the process data on the touch screen. In addition, the controller 180 can control the mobile terminal 100 to execute different operations or process different data (or information) according to whether a touch with respect to the same point on the touch screen is either a proximity touch or a contact touch.

A touch sensor may sense a touch (or touch input) applied onto the touch screen (or the display unit 151) using at least one of various types of touch methods, such as a resistive type, a capacitive type, an infrared type, a magnetic field type, and the like. As one example, the touch sensor may be configured to convert changes of pressure applied to a specific part of the display unit 151 or a capacitance occurring from a specific part of the display unit 151, into electric input signals. Also, the touch sensor may be configured to sense not only a touched position and a touched area, but also touch pressure. Here, a touch object is an object to apply a touch input onto the touch sensor. Examples of the touch object may include a finger, a touch pen, a stylus pen, a pointer or the like.

When touch inputs are sensed by the touch sensors as described above, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180 or the controller 180 itself.

Further, the controller 180 can execute a different control or the same control according to a type of an object which touches the touch screen (or a touch key provided in addition to the touch screen). Whether to execute the different control or the same control according to the object which gives a touch input may be decided based on a current operating state of the mobile terminal 100 or a currently executed application program. Meanwhile, the touch sensor and the proximity sensor may be executed individually or in combination, to sense various types of touches, such as a short (or tap) touch, a long touch, a multi-touch, a drag touch, a flick touch, a pinch-in touch, a pinch-out touch, a swipe touch, a hovering touch, and the like.

An ultrasonic sensor may be configured to recognize position information relating to a sensing object by using ultrasonic waves. The controller 180 can calculate a position of a wave generation source based on information sensed by an illumination sensor and a plurality of ultrasonic sensors. Since light is much faster than ultrasonic waves, a time for which the light reaches the optical sensor may be much shorter than a time for which the ultrasonic wave reaches the ultrasonic sensor. The position of the wave generation source may be calculated using the fact. In more detail, the position of the wave generation source may be calculated by using a time difference from the time that the ultrasonic wave reaches based on the light as a reference signal.

The camera 121 constructing the input unit 120 may be a type of camera sensor (for example, CCD, CMOS, etc.) The camera sensor may include at least one of a photo sensor and a laser sensor. The camera 121 and the laser sensor may be combined to detect a touch of the sensing object with respect to a 3D stereoscopic image. The photo sensor may be laminated on the display device. The photo sensor may be configured to scan a movement of the sensing object in proximity to the touch screen. In more detail, the photo sensor may include photo diodes and transistors at rows and columns to scan content placed on the photo sensor by using an electrical signal which changes according to the quantity of applied light. Namely, the photo sensor may calculate the coordinates of the sensing object according to variation of light to thus obtain position information of the sensing object.

The display unit 151 can output information processed in the mobile terminal 100. For example, the display unit 151 can display execution screen information of an application program driven in the mobile terminal 100 or user interface (UI) and graphic user interface (GUI) information in response to the execution screen information.

Furthermore, the display unit 151 can also be implemented as a stereoscopic display unit for displaying stereoscopic images. The stereoscopic display unit may employ a stereoscopic display scheme such as stereoscopic scheme (a glass scheme), an auto-stereoscopic scheme (glassless scheme), a projection scheme (holographic scheme), or the like.

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may also provide audible output signals related to a particular function (e.g., a call signal reception sound, a message reception sound, etc.) performed by the mobile terminal 100. The audio output module 152 may include a receiver, a speaker, a buzzer or the like.

A haptic module 153 may generate various tactile effects the that user may feel. A typical example of the tactile effect generated by the haptic module 153 may be vibration. Strength, pattern and the like of the vibration generated by the haptic module 153 may be controllable by a user selection or setting of the controller. For example, the haptic module 153 may output different vibrations in a combining manner or a sequential manner.

Besides vibration, the haptic module 153 may generate various other tactile effects, including an effect by stimulation such as a pin arrangement vertically moving with respect to a contact skin, a spray force or suction force of air through a jet orifice or a suction opening, a touch on the skin, a contact of an electrode, electrostatic force, etc., an effect by reproducing the sense of cold and warmth using an element that can absorb or generate heat, and the like.

The haptic module 153 may be implemented to allow the user to feel a tactile effect through a muscle sensation such as the user's fingers or arm, as well as transferring the tactile effect through a direct contact. Two or more haptic modules 153 may be provided according to the configuration of the mobile terminal 100.

An optical output module 154 may output a signal for indicating an event generation using light of a light source. Examples of events generated in the mobile terminal 100 may include a message reception, a call signal reception, a missed call, an alarm, a schedule notice, an email reception, an information reception through an application, and the like.

A signal output by the optical output module 154 may be implemented so the mobile terminal emits monochromatic light or light with a plurality of colors. The signal output may be terminated as the mobile terminal senses a user's event checking.

The interface unit 160 may serve as an interface with every external device connected with the mobile terminal 100. For example, the interface unit 160 may receive data transmitted from an external device, receive power to transfer to each element within the mobile terminal 100, or transmit internal data of the mobile terminal 100 to an external device. For example, the interface unit 160 may include wired or wireless headset ports, external power supply ports, wired or wireless data ports, memory card ports, ports for connecting a device having an identification module, audio input/output (I/O) ports, video I/O ports, earphone ports, or the like.

Further, the identification module may be a chip that stores various information for authenticating authority of using the mobile terminal 100 and may include a user identity module (UIM), a subscriber identity module (SIM), a universal subscriber identity module (USIM), and the like. In addition, the device having the identification module (referred to as 'identifying device', hereinafter) may take the form of a smart card. Accordingly, the identifying device may be connected with the terminal 100 via the interface unit 160.

Furthermore, when the mobile terminal 100 is connected with an external cradle, the interface unit 160 may serve as a passage to allow power from the cradle to be supplied to the mobile terminal 100 therethrough or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 may store programs for operations of the controller 180 and temporarily store input/output data (for example, phonebook, messages, still images, videos, etc.). The memory 170 may store data related to various patterns of vibrations and audio which are output in response to touch inputs on the touch screen.

The memory 170 may include at least one type of storage medium including a Flash memory, a hard disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, and an optical disk. Also, the mobile terminal 100 may be operated in relation to a web storage device that performs the storage function of the memory 170 over the Internet.

Further, as aforementioned, the controller 180 can typically control the general operations of the mobile terminal 100. For example, the controller 180 can set or release a locked state for restricting a user from inputting a control command with respect to applications when a status of the mobile terminal meets a preset condition.

Furthermore, the controller 180 can also perform controlling and processing associated with voice calls, data communications, video calls, and the like, or perform pattern recognition processing to recognize a handwriting input or a picture drawing input performed on the touch screen as characters or images, respectively. In addition, the controller 180 can control one or combination of those components in order to implement various embodiments disclosed herein on the mobile terminal 100.

The power supply unit 190 may receive external power or internal power and supply appropriate power required for operating respective elements and components included in the mobile terminal 100 under the control of the controller 180. The power supply unit 190 may include a battery. The battery may be an embedded battery which is rechargeable or be detachably coupled to the terminal body for charging.

Furthermore, the power supply unit 190 may include a connection port. The connection port may be configured as one example of the interface unit 160 to which an external (re)charger for supplying power to recharge the battery is electrically connected. As another example, the power supply unit 190 may be configured to recharge the battery in a wireless manner without use of the connection port. Here, the power supply unit 190 may receive power, transferred from an external wireless power transmitter, using at least one of an inductive coupling method which is based on magnetic induction or a magnetic resonance coupling method which is based on electromagnetic resonance. Further, various embodiments described herein may be implemented in a computer-readable or its similar medium using, for example, software, hardware, or any combination thereof.

Referring to FIGS. 1B and 1C, the mobile terminal 100 disclosed herein may be provided with a bar-type terminal body. However, the present invention is not limited to this, but also may be applicable to various structures such as watch type, clip type, glasses type or folder type, flip type, slide type, swing type, swivel type, or the like, in which two and more bodies are combined with each other in a relatively movable manner.

The mobile terminal 100 may include a case (casing, housing, cover, etc.) forming the appearance of the terminal. In this embodiment, the case may be divided into a front case 101 and a rear case 102. Various electronic components may be incorporated into a space formed between the front case 101 and the rear case 102. At least one middle case may be additionally disposed between the front case 101 and the rear case 102

A display unit 151 may be disposed on a front surface of the terminal body to output information. As illustrated, a window 151a of the display unit 151 can be mounted to the front case 101 so as to form the front surface of the terminal body together with the front case 101. In some instances, electronic components may also be mounted to the rear case 102. Examples of those electronic components mounted to the rear case 102 may include a detachable battery, an identification module, a memory card and the like. Here, a rear cover 103 for covering the electronic components mounted may be detachably coupled to the rear case 102. Therefore, when the rear cover 103 is detached from the rear case 102, the electronic components mounted to the rear case 102 may be externally exposed.

As illustrated, when the rear cover 103 is coupled to the rear case 102, a side surface of the rear case 102 may be partially exposed. In some instances, upon the coupling, the rear case 102 may also be completely shielded by the rear cover 103. Further, the rear cover 103 may include an opening for externally exposing a camera 121b or an audio output module 152b. The cases 101, 102, 103 may be formed by injection-molding synthetic resin or may be formed of a metal, for example, stainless steel (STS), titanium (Ti), or the like.

Unlike the example which the plurality of cases form an inner space for accommodating such various components, the mobile terminal 100 may be configured such that one case forms the inner space. In this example, a mobile terminal 100 having a uni-body formed so synthetic resin or metal extends from a side surface to a rear surface may also be implemented.

Further, the mobile terminal 100 may include a waterproofing unit for preventing an introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output modules 152a and 152b, a proximity sensor 141, an illumination sensor included in an optical output module 154, first and second cameras 121a and 121b, first and second manipulation units 123a and 123b, a microphone 122, an interface unit 160 and the like.

Hereinafter, description will be given of an mobile terminal 100 that the display unit 151, the first audio output module 152a, the proximity sensor 141, the illumination sensor 142, the optical output module 154, the first camera 121a and the first manipulation unit 123a are disposed on the front surface of the terminal body, the second manipulation unit 123b, the microphone 122 and the interface unit 160 are disposed on a side surface of the terminal body, and the second audio output module 152b and the second camera 121b are disposed on a rear surface of the terminal body, with reference to FIGS. 1B and 1C.

Here, those components may not be limited to the arrangement, but be excluded or arranged on another surface if necessary. For example, the first manipulation unit 123a may not be disposed on the front surface of the terminal body, and the second audio output module 152b may be disposed on the side surface other than the rear surface of the terminal body.

The display unit 151 can output information processed in the mobile terminal 100. For example, the display unit 151 can display execution screen information of an application program driven in the mobile terminal 100 or user interface (UI) and graphic user interface (GUI) information in response to the execution screen information.

The display unit 151 can include at least one of a liquid crystal display (LCD), a thin film transistor-liquid crystal display (TFT-LCD), an organic light emitting diode (OLED), a flexible display, a 3-dimensional (3D) display, and an e-ink display. Furthermore, the display unit 151 can be implemented in two or more in number according to a configured aspect of the mobile terminal 100. For instance, a plurality of the display units 151 may be arranged on one surface to be spaced apart from or integrated with each other, or may be arranged on different surfaces.

Furthermore, the display unit 151 can include a touch sensor which senses a touch onto the display unit so as to receive a control command in a touching manner. When a touch is input to the display unit 151, the touch sensor may be configured to sense this touch and the controller 180 can generate a control command corresponding to the touch. The content which is input in the touching manner may be a text or numerical value, or a menu item which can be indicated or designated in various modes.

Further, the touch sensor may be configured in a form of film having a touch pattern. The touch sensor may be a metal wire, which is disposed between the window 151a and a display on a rear surface of the window 151a or patterned directly on the rear surface of the window 151a. Or, the touch sensor may be integrally formed with the display. For example, the touch sensor may be disposed on a substrate of the display or within the display.

Thus, the display unit 151 can form a touch screen together with the touch sensor. Here, the touch screen may serve as the user input unit 123 (see FIG. 1A). Therefore, the touch screen may replace at least some of functions of the first manipulation unit 123a.

The first audio output module 152a may be implemented in the form of a receiver for transferring voice sounds to the user's ear or a loud speaker for outputting various alarm sounds or multimedia reproduction sounds.

The window 151a of the display unit 151 can include a sound hole for emitting sounds generated from the first audio output module 152a. Here, the present invention is not limited to this. It may also be configured such that the sounds are released along an assembly gap between the structural bodies (for example, a gap between the window 151a and the front case 101). In this instance, a hole independently formed to output audio sounds may not be seen or hidden in terms of appearance, thereby further simplifying the appearance of the mobile terminal 100.

The optical output module 154 may output light for indicating an event generation. Examples of the event generated in the mobile terminal 100 may include a message reception, a call signal reception, a missed call, an alarm, a schedule notice, an email reception, information reception through an application, and the like. When a user's event checking is sensed, the controller may control the optical output unit 154 to stop the output of the light.

The first camera 121a may process video frames such as still or moving images obtained by the image sensor in a video call mode or a capture mode. The processed video frames may be displayed on the display unit 151 or stored in the memory 170.

The first and second manipulation units 123a and 123b are examples of the user input unit 123, which may be manipulated by a user to input a command for controlling the operation of the mobile terminal 100. The first and second manipulation units 123a and 123b may also be commonly referred to as a manipulating portion, and may employ any method if it is a tactile manner allowing the user to perform manipulation with a tactile feeling such as touch, push, scroll or the like.

The drawings are illustrated on the basis that the first manipulation unit 123a is a touch key, but the present invention is not limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

Further, as another example of the user input unit 123, a rear input unit may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present invention is not limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 can be implemented to have a larger screen.

Further, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123. The microphone 122 may be formed to receive the user's voice, other sounds, and the like. The microphone 122 may be provided at a plurality of places, and configured to receive stereo sounds.

The interface unit 160 may serve as a path allowing the mobile terminal 100 to exchange data with external devices. For example, the interface unit 160 may be at least one of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a. The second camera 121b may include a plurality of lenses arranged along at least one line. The plurality of lenses may also be arranged in a matrix configuration. The cameras may be referred to as an 'array camera.' When the second camera 121b is implemented as the array camera, images may be captured in various manners using the plurality of lenses and images with better qualities may be obtained.

A flash 124 may be disposed adjacent to the second camera 121b. When an image of a subject is captured with the camera 121b, the flash 124 may illuminate the subject. The second audio output module 152b may further be disposed on the terminal body. The second audio output module 152b may implement stereophonic sound functions in conjunction with the first audio output module 152a (refer to FIG. 1A), and may be also used for implementing a speaker phone mode for call communication.

At least one antenna for wireless communication may be disposed on the terminal body. The antenna may be installed in the terminal body or formed on the case. For example, an antenna which configures a part of the broadcast receiving module 111 (see FIG. 1A) may be retractable into the terminal body. Alternatively, an antenna may be formed in a form of film to be attached onto an inner surface of the rear cover 103 or a case including a conductive material may serve as an antenna.

A power supply unit 190 for supplying power to the mobile terminal 100 may be disposed on the terminal body. The power supply unit 190 may include a batter 191 which is mounted in the terminal body or detachably coupled to an outside of the terminal body.

The battery 191 may receive power via a power source cable connected to the interface unit 160. Also, the battery 191 may be (re)chargeable in a wireless manner using a wireless charger. The wireless charging may be implemented by magnetic induction or electromagnetic resonance.

Further, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

Hereinafter, preferred embodiments related to a control method which can be implemented in the mobile terminal will be explained in more detail with reference to the attached drawings. It is obvious to those skilled in the art that the present features can be embodied in several forms without departing from the characteristics thereof.

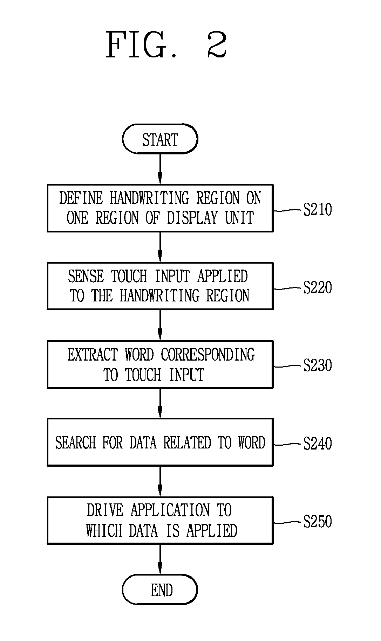

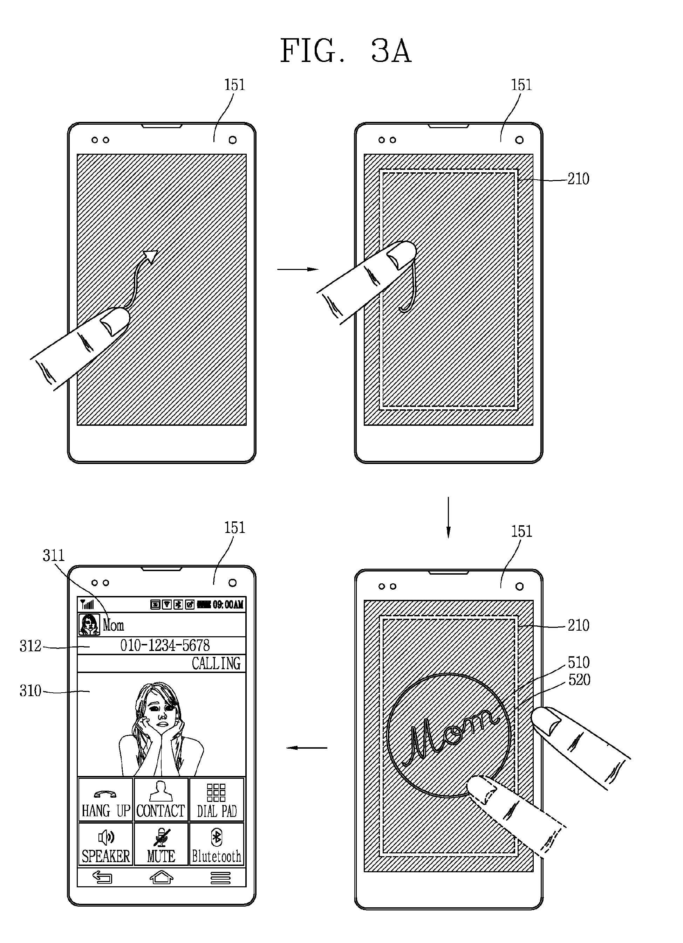

Next, FIG. 2 is a flow chart illustrating a method for controlling a mobile terminal according to an embodiment of the present invention, and FIGS. 3A through 3E are conceptual views illustrating the control method of FIG. 2 according to various examples when the display unit 151 is in a deactivated state.

A method for controlling a mobile terminal through a touch input applied by a user when the display unit 151 is in a deactivated state will be described. The mobile terminal according to an embodiment of the present invention includes the display unit 151 and a touch sensing unit formed on a front surface of the display unit 151. The display unit 151 outputs screen information. The screen information includes a home screen page, an execution screen of an application, a reproduction screen of a media file, a pre-set image, or the like. There is no limitation in screen information output to the display unit 151. The touch sensing unit is formed on a front surface of the display unit 151 and senses a touch input applied by a user.

Here, the "state in which the display unit 151 is deactivated" refers to a state in which internally provided lighting to illuminate the display unit 151 is in an OFF state. That is, when the display unit 151 is deactivated, no information or graphic image is displayed on the display unit 151.

When the display unit 151 is maintained in the deactivated state, the controller 180 controls the touch sensor to sense a user's touch input. For example the controller 180 can maintain the touch sensing unit in an activated state or may be driven in a doze mode in which a pre-set period with an activated state and a deactivated state are switched at every pre-set period in order to minimize battery consumption. The pre-set period may be set such that, in sensing a touch applied to the display unit 151, a sensing speed thereof is as fast as possible not to be recognized by the user, while increasing efficiency of power consumption. For example, the pre-set period may be set such that the touch sensor is activated thirty times (30Hz) per second. This may be a minimum current level at which the display unit 151 can recognize a touch applied thereto in a deactivated state.

The display unit 151 can define a first handwriting region 210 in at least one region of the display unit 151 (S201). Here, the first handwriting region 210 may correspond to the entire region of the display unit 151 or may be set by a user or a terminal manufacturer. For example, the first handwriting region 210 may be defined as a region excluding edge regions of the display unit 151.

The touch sensing unit senses a handwriting input applied to the first handwriting region 210 (S202). Here, the handwriting input may be defined as a continuous touch input applied to the display unit 151 according to a user's intention to input a word and including directionality. Namely, an image corresponding to the handwriting input may be applied to form a word.

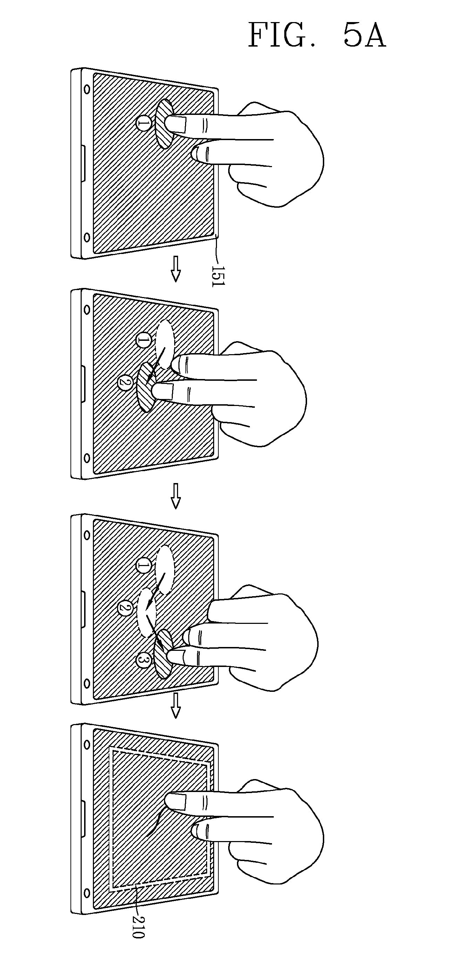

Referring to (a) and (b) of FIG. 3A, the display unit 151 can display the first handwriting region 210. In this instance, the controller 180 can switch the display unit 151 to an activated state based on a pre-set handwriting input. For example, when a touch input having a pre-set touch range or greater is sensed by the touch sensing unit, the controller 180 can activate the display unit 151 to display the first handwriting region 210. However, the user's touch input to display the first handwriting region 210 is not limited thereto. A control method of displaying a handwriting region in the deactivated state will be described in detail with reference to FIGS. 5A through 5E hereinbelow.

As illustrated in FIG. 3A, the display unit 151 can display only the edges of the first handwriting region 210 in a dark background. Accordingly, the user can apply handwriting in the first handwriting region 210. In this instance, however, a handwriting input is not limited to a region other than the first handwriting region 210 of the display unit 151 is not limited. Namely, the user can sense that a handwriting input can be applied to the first handwriting region 210 displayed on the display unit 151.

The display unit 151 outputs a handwriting image according to a handwriting input applied to the display unit 151. Namely, the display unit 151 displays a handwriting image in a touch region sensed by the touch sensing unit. As illustrated in (c) of FIG. 3A, the display unit 151 can display a handwriting image having a shape such as being written on paper with a pen on the region to which the handwriting input has been applied. However, the shape of the handwriting image is not limited thereto and a handwriting image as if it was written with a pencil, sharp pencil, a writing brush, or the like, may be output. Also, a color of the handwriting image is not limited.

Referring to (c) of FIG. 3A, the handwriting image may include a first word image 510 including a shape "Mom" based on a first handwriting input by the user and a circular first pattern image 520 surrounding the first word image 510 based on a second handwriting input.

After the first pattern image 520 is formed, when the handwriting input is released from the display unit 151, the controller 180 extracts words included in the handwriting input (S203). Namely, the controller 180 extracts a word image from the handwriting image corresponding to the handwriting input. For example, the controller 180 can extract a corresponding word by analyzing a structure analysis. Alternatively, the controller 180 can recognize a shape of a word according to the stroke input order in which the handwriting input has been applied and a trace of the input handwriting, and match the recognized shape of the word with a previously input word model to recognize and extract the word.

However, after the handwriting input corresponding to the pattern image is released, the controller 180 does not need to recognize the word and search for related data. Namely, when a handwriting input is applied to the display unit 151 or when a handwriting input is released, the controller 180 can extract a word based on the applied handwriting input.

The controller 180 searches for related data relevant to the extracted word (S204). For example, the controller 180 can perform searching using the word as a search word in the memory 170 or perform searching using the word as a search word from a pre-set server using the wireless communication unit 110.

The configuration for searching for related data of the word may be determined by the first pattern image 520. Then, the controller 180 drives an application to with the data, based on the first pattern image 520 (S205). That is, the controller 180 selects an application corresponding to the first pattern image 520, and searches for the data related to the word by using a particular component (i.e., the memory 170 or the wireless communication unit 110) to apply the searched data to the application.

Referring to (c) and (d) of FIG. 3A, the controller 180 can execute a call application based on the circular pattern image 520 and drive a call origination function. Accordingly, the controller 180 searches for contact number information including the word from the memory 170. That is, the data may correspond to a phone number tagged together with the word. The controller 180 drives the application to originate a call using the searched data (the phone number).

Here, only when a handwriting input is applied such that the circular pattern has a closed loop, the controller 180 can drive the application. That is, when a handwriting input is released by the user before the circular shape is completely formed, the controller 180 can limit execution of the application.

Also, the memory 170 can store matching information between a pattern previously set by the user or a terminal manufacturer and an application. That is, the controller 180 can search the memory 170 for information of an application matched to the pattern image, and execute the corresponding application. In addition, the circular pattern is determined to have a closed loop when a distance between a first touch point and a touch release point forming the pattern image is smaller than a pre-set distance (a maximum distance recognized when a point is touched with a finger).

The controller 180 controls the wireless communication unit 110 to execute the call application and simultaneously originate a call to an external terminal having the phone number (data). The controller 180 controls the display unit 151 to output a call origination screen 310. The call origination screen 310 may include the word (Mom 311) formed by the first handwriting input and the phone number 312 searched as data related to the word.

According to the present embodiment, the controller 180 analyzes a handwriting input based on a user's touch to extract a word, searches for data related to the word, and drives an application using the searched data. Thus, the user can execute the application more promptly, without having to perform a plurality of processes.

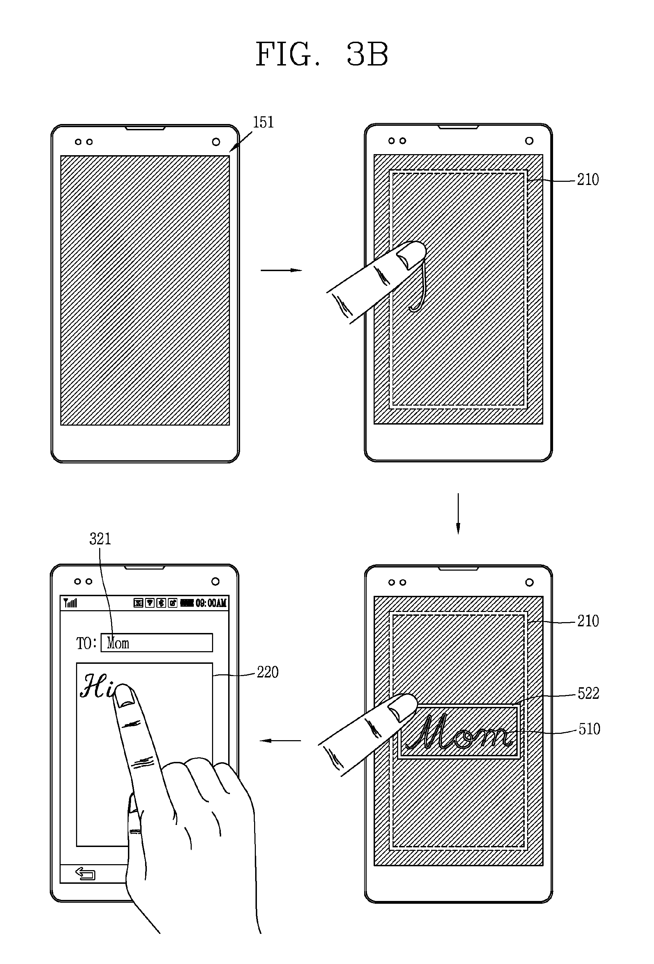

Also, the controller 180 can drive different applications by pre-set different patterns formed by user's handwriting inputs. Hereinafter, a control method of driving different applications based on a second pattern image having a shape different from that of the first pattern image will be described with reference to FIG. 3B.

Referring to (a) through (c) of FIG. 3B, the controller 180 controls the display unit 151 to output the first word image 510 based on the first handwriting input applied to the first handwriting region 210 and a second pattern image 522 based on a second handwriting input. For example, the second pattern image 522 may correspond to a rectangular shape forming a closed loop.

When the handwriting input forming the second pattern image 522 is sensed by the touch sensing unit, the controller 180 executes a message application. Also, when the user's handwriting input is released, the controller 180 controls the display unit 151 to output a first execution screen 320 corresponding to the message application.

Also, the controller 180 drives the message application such that the data is designated as a reception number for receiving a message, based on the second handwriting input. The controller 180 controls the display unit 151 to output the first execution screen 320 of the message application. A word extracted by the controller 180 is output to an input region in which the recipient of the first execution screen 320 is input such that it corresponds to the word image. That is, although the user does not go through an input step, the controller 180 controls the wireless communication unit 110 to input the word to the recipient and transmit a message to a phone number corresponding to the word.

Also, the first execution screen 320 includes a first handwriting window 220. Here, the handwriting window is defined as including the handwriting region for receiving a user's handwriting input. Based on the user's handwriting input applied to the first handwriting window 220, the display unit 151 outputs an image on a region corresponding to the handwriting input. Also, the controller 180 can extract a word from the handwriting image applied to the first handwriting window 220 and transmit the word to the phone number.

A message transmitted to an external terminal having the phone number may correspond to a printed word changed from the user's handwriting image, but the present invention is not limited thereto. That is, the controller 180 can control the application to transmit the handwriting mage formed by the user's handwriting input.

Further, various applications, as well as the call application or the message application, can be driven based on first and second handwriting inputs. That is, the user can input the same word image based on the handwriting input, and apply the handwriting input to form different pattern images to drive an application to which related data is applied. Thus, the processes of executing an application, searching for related data, and inputting the related data to an execution screen can be omitted.

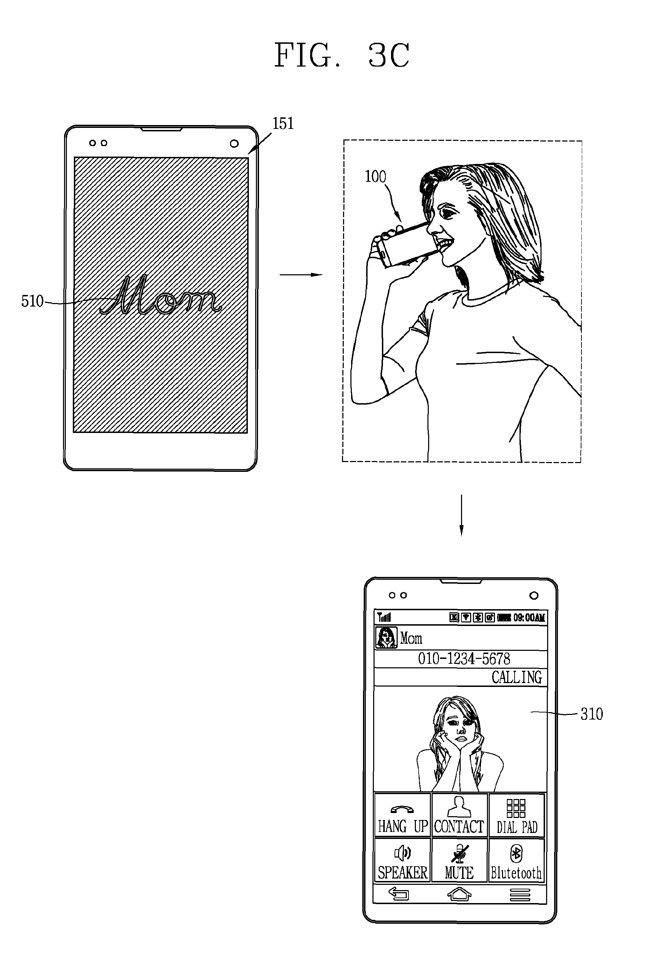

A control method of driving an application to which the data is applied based on a pre-set control command will be described with reference to FIG. 3C. Referring to (a)-(c) of FIG. 3C, the display unit 151 in a deactivated state outputs an image 510 based on a user's handwriting input sensed by the touch sensing unit. The controller 180 can extract a corresponding word from the image 510.

When it is sensed that the terminal body is positioned in proximity to the user's face by the sensing unit 140, the controller 180 executes a call application and drives a call function and displays a call origination screen 310. The controller 180 controls the application to search for data related to the word and originate a call to an external terminal having the data.

In FIGs. 3A-3C, a control command for executing an application corresponds to the user's handwriting input with a pre-set pattern sensed by the touch sensing unit. The mobile terminal according to the present embodiment may include a movement sensing unit for sensing a movement of the terminal body. For example, the movement sensing unit may be implemented by a motion sensor, a gyro sensor, an accelerometer, and the like. Namely, the user can apply a handwriting input of drawing a word of a target with which he or she wants to speak to the display unit 151 and position the terminal body in close proximity to his or her face. Then, the user can be connected to the input counterpart for call communication. Also, the display unit 151 can output the call origination screen 310.

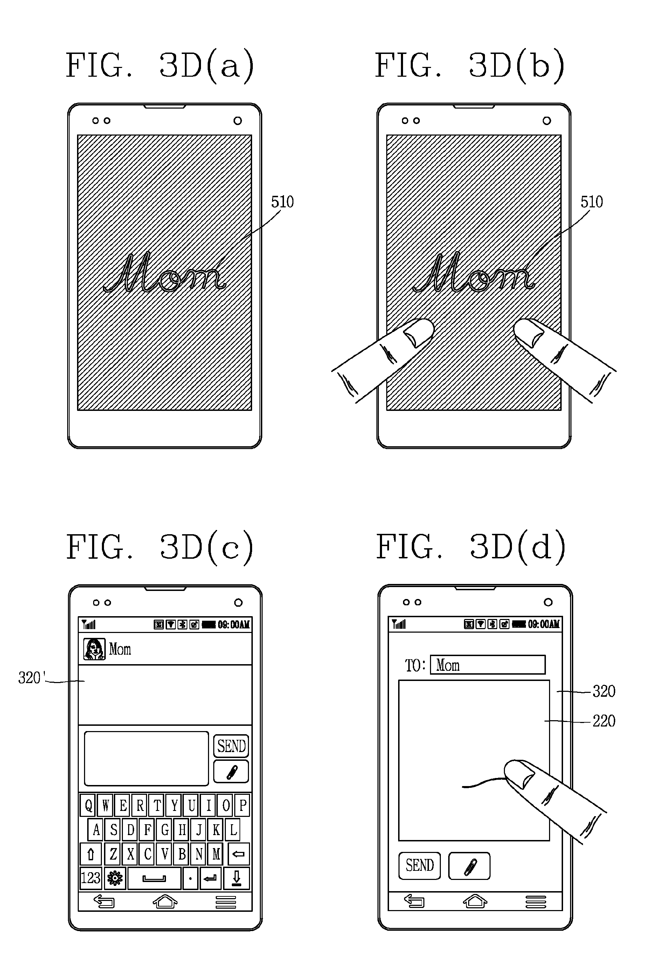

A control method of driving a message application based on another control command will be described with reference to FIG. 3D. Based on a handwriting input sensed by the touch sensing unit when the display unit 151 is deactivated, the controller 180 controls the display unit 151 to output a first word image 510 as shown in FIG. 3D(a).

The controller 180 controls the touch sensing unit to sense a user's touch input continuously, while outputting the first word image 510. When a plurality of touch inputs (namely, a multi-touch input) simultaneously applied to different regions of the display unit 151 are sensed by the touch sensing unit, the controller 180 executes the message application as shown in FIGs. 3D(b) and (c).

In addition, a particular touch region for receiving a multi-touch input or the number of multiple touches may be set by the user to execute a particular application. The display unit 151 can also not output an image based on the multi-touch input.

Meanwhile, referring to (c) of FIG. 3D, the display unit 151 can output a second execution screen 320' of the message application. The second execution screen 320' includes the printed word as a recipient of the message and includes an input region to which text is to be input by the user. Also, the second execution screen 320' may further include a virtual keyboard for receiving a user's touch input in order to input text.

Referring to (d) of FIG. 3D, the display unit 151 outputs the first execution screen 320. The first execution screen 320 may include a first handwriting window 220 for receiving a user's handwriting input to output a printed word 321 corresponding to the word image and the word image. Namely, when an application is executed based on a word image input to the handwriting region and a control command, the controller 180 can use a word image based on the user's handwriting input for inputting text, but the present invention is not limited thereto. Namely, when the application is executed, an execution screen substantially identical to an execution screen of the application executed by an icon may be provided.

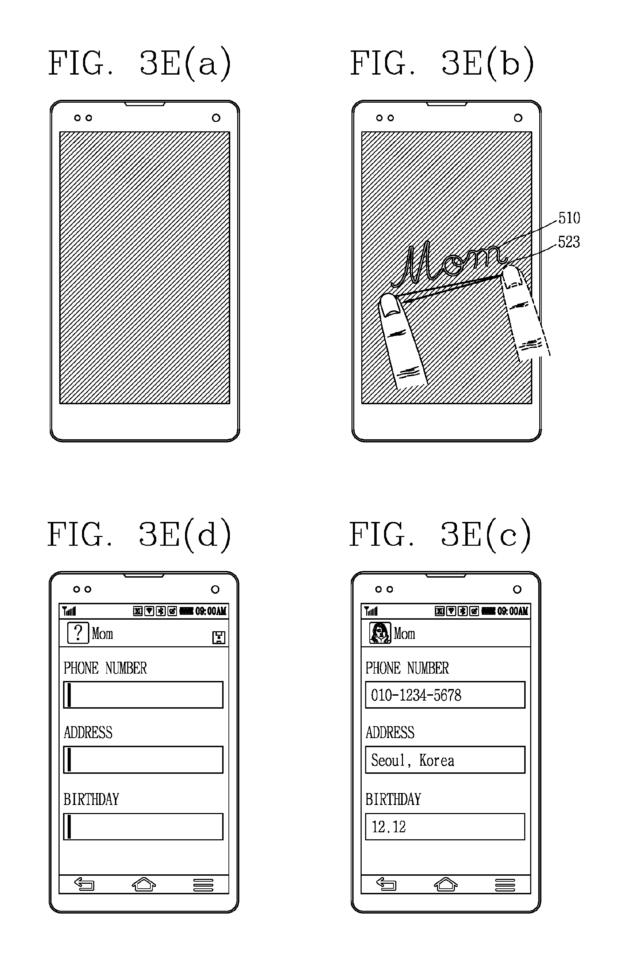

A control method of executing an address list application based on a handwriting input will be described with reference to FIG. 3E. The controller 180 can control the display unit 151 to output the first word image 510 and a third pattern image 523 based on the user's handwriting input as shown in FIGs. 3E(a) and (b). Here, the third pattern image 523 is formed by a continuous touch input, starting from a start point, drawn to a certain point and returned to the start point. However, the shape of the pattern is not limited thereto.

When the handwriting input forming the third pattern image 523 is released, the controller 180 executes an address list application as shown in FIGs. 3E(c) and (d). That is, the controller 180 searches the memory 170 for data including the word extracted from the first word image 510 (or data stored upon being matched to the word). Then, the controller 180 executes the address list application to output data including the word, namely, address list data in which the word is stored as a name.

Further, when the data including the word is not found, the controller 180 executes the address list application. The controller 180 controls the display unit 151 to output the word to an input region for inputting a name, and to output an execution screen for inputting address list data. However, when a word input based on the handwriting input is a number, the controller 180 can control the display unit 151 to output the number to the input region for inputting a phone number. According to the present embodiment, the user can promptly search for address list information stored in the memory 170 and simply execute the address list application.

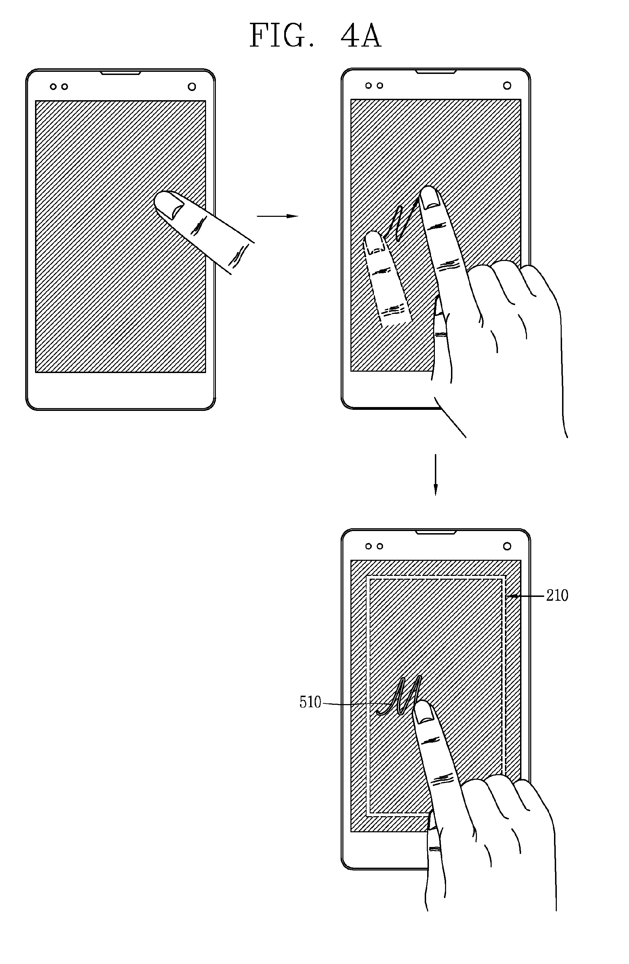

Next, FIGS. 4A through 4C are conceptual views illustrating a touch sensing unit sensing a handwriting input. Referring to FIGs. 4A(a)-(c), the touch sensing unit senses a user's touch input when the display unit 151 is in a deactivated state. Although the touch sensing unit senses a touch input, the controller 180 can maintain the display unit 151 in the deactivated state as shown in FIGs. 4A(a) and (b).

When the touch input is applied by a touch range equal to or greater than a pre-set touch range, or when a user's continuous touch input is applied such that it includes a point of inflection, the controller 180 can activate the display unit 151. When the display unit 151 is activated, the display unit 151 can output an image corresponding to the user's handwriting input and display the defined first handwriting region 210 as shown in FIGs. 4A(b) and (c). Accordingly, even though a touch input unintentionally applied to the display unit 151 is sensed, the touch is disregarded, thereby reducing power consumption, and controlling of the mobile terminal by an unintended touch input is prevented.

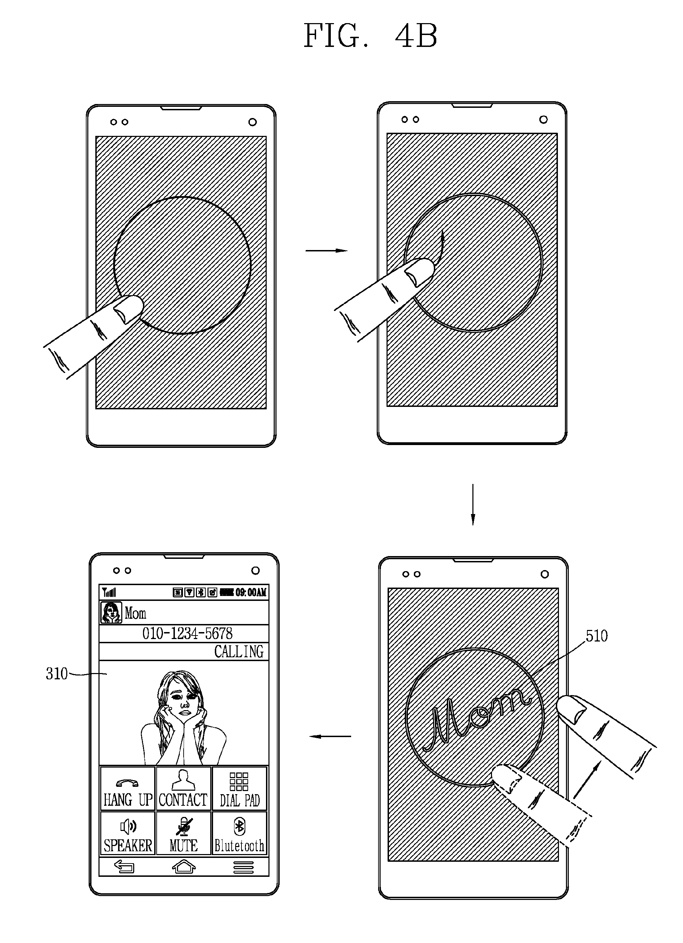

Referring to FIGs. 4B(a)-(d), the touch sensing unit first senses a user's handwriting input applied along a pre-set pattern. When the handwriting input applied in the form of the pre-set pattern is sensed, the controller 180 can activate the display unit 151. Here, the pre-set pattern may be a shape forming a closed loop. The activated display unit 151 may display the defined first handwriting region. The handwriting region may have a pre-set size and shape. That is, only when a handwriting input is applied along a pattern forming a closed loop, the controller 180 can activate the display unit 151 and sense an additional handwriting input, and thus, only a user's intentional handwriting input for controlling the mobile terminal may be sensed. The mobile terminal may set a plurality of patterns for activating the display unit 151. The patterns may correspond to different applications or may correspond to different functions of applications, respectively.

According to another embodiment, the handwriting region may be defined as a region corresponding to a shape in which the handwriting input is applied. That is, the user can apply a handwriting input to the display unit 151 to define a region in which a handwriting input is to be applied. Based on the handwriting input applied to the handwriting region 510, the controller 180 can extract a word based on the handwriting input applied to the handwriting region 510, execute an application corresponding to the pre-set pattern, and apply the word to drive the application as shown in FIGs. 4B(a)-(d).

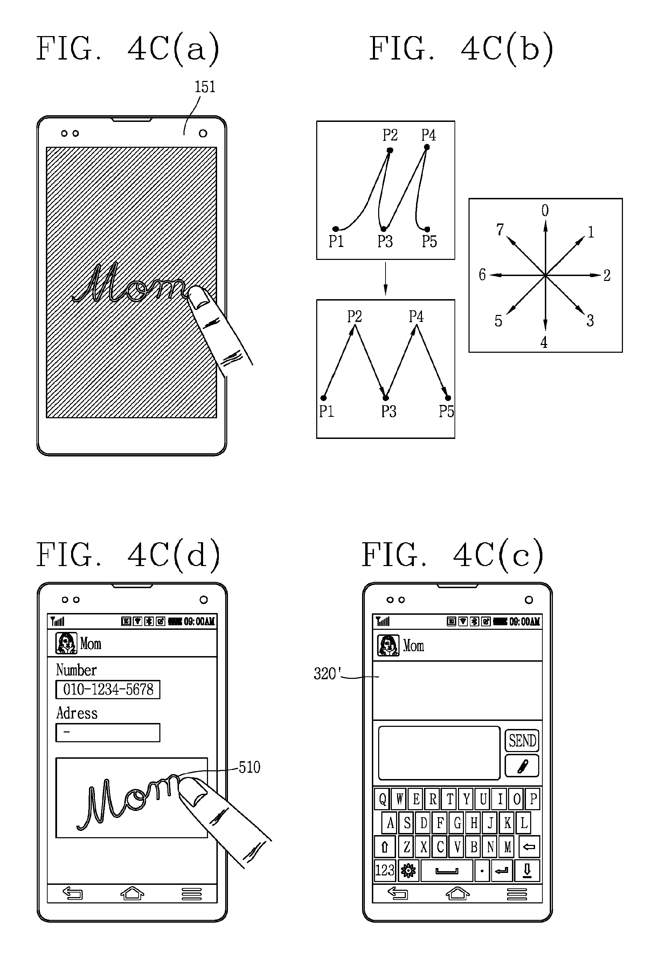

Next, FIG. 4C is a conceptual view illustrating a control method of analyzing a handwriting input applied to the display unit 151. Referring to (a) of FIG. 4C, the controller 180 senses a handwriting input applied to the display unit 151 and controls the display unit 151 to output an image. The controller 180 can analyze the handwriting input as a word or an image.

Referring to (b) of FIG. 4C, the controller 180 can sense directions of a continuous touch input forming a handwriting input, and senses coordinates P1, P2, P3, P4, and P5 at which directions of the touch input are changed. Also, the controller 180 calculates directional vectors formed by (n-1)th coordinates and nth coordinates, matches the coordinates and the directional vectors to shapes of words, and extracts a matched word as a word corresponding to the image. The controller 180 applies the extracted word to the application.

Meanwhile, referring to (c) of FIG. 4C, the controller 180 senses a signal applied by the handwriting input as an image, and compares the sensed image with a previously stored image. The controller 180 can search for data matched to the image based on the handwriting input, among a plurality of stored images, and extract the searched data as the word. The second execution screen 320' is also displayed allowing the user to send a message to "Mom" using a virtual keyboard, for example. FIG. 4C(d) illustrates an alternative example in which the can input message contents by writing in an input region such as the word 510.

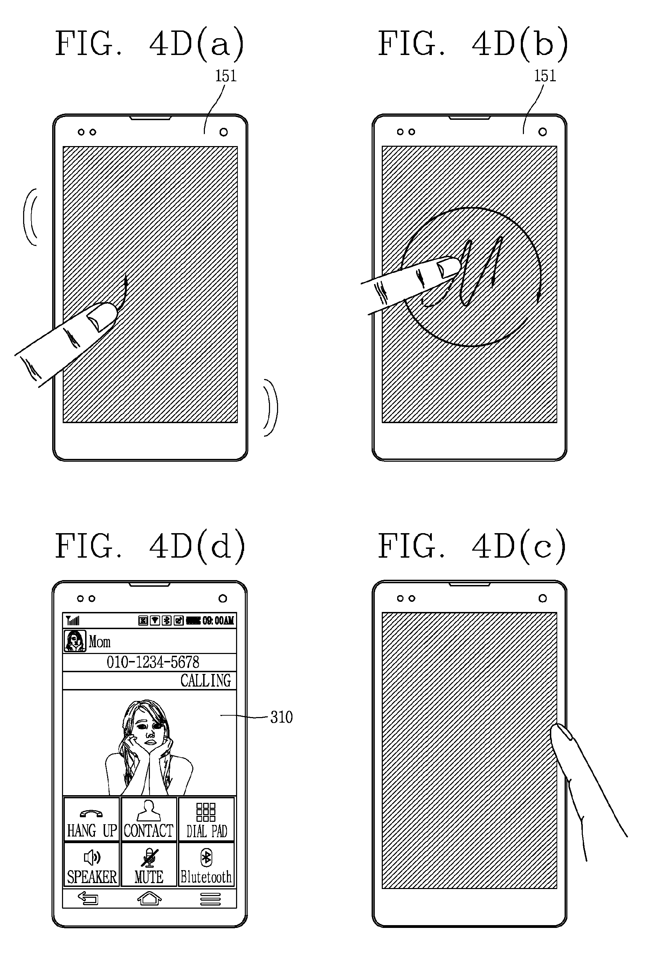

A control method of applying a handwriting input in a state in which the display unit is deactivated will be described with reference to FIG. 4D. Referring to (a) and (b) of FIG. 4D, when the display unit 151 is deactivated, the touch sensing unit senses a user's touch input. According to the present embodiment, when the handwriting input is applied and the touch sensing unit senses the handwriting input, the display unit is maintained in the deactivated state as shown in (c) of FIG. 4D. That is, the display unit 151 does not output a handwriting window or an image according to the handwriting input.

For example, the controller 180 can control the haptic module 153 to generate vibration when the touch sensing unit senses the user's touch input. Also, according to the present embodiment, the controller 180 maintains the display unit 151 in the deactivated state. Accordingly, the user can recognize that the touch has been received. Meanwhile, the controller 180 can control the haptic module 153 to generate particular vibrations while the user's touch input is being applied.

That is, when power of the mobile terminal is turned off, vibrations may not be generated by a touch input applied to the display unit 151. Thus, when the display unit 151 is in a deactivated state, the user can check whether power of the mobile terminal is turned on. Also, the controller 180 can activate the haptic module 153 to differentiate between release and maintaining of a lock mode according to the handwriting input by vibration patterns. The corresponding operation is then executed as shown in (d) of FIG. 4D

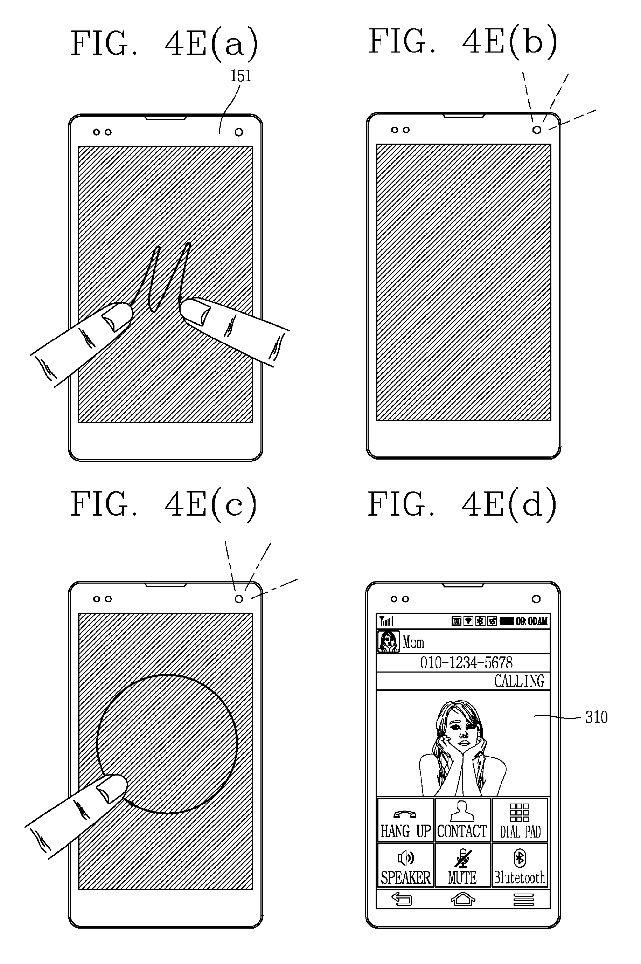

Referring to FIG. 4E, the controller 180 analyzes the handwriting input. In more detail, the controller 180 analyzes text according to the handwriting input or analyzes a control command for executing a particular function. According to the present embodiment, while the handwriting input is applied and the touch sensing unit senses the applied handwriting input, the display unit 151 is maintained in the deactivated state. Namely, the display unit 151 does not output the handwriting window nor output an image according to the handwriting input as shown in (a) and (b) in FIG. 4E.

For example, when the display unit 151 is switched from the deactivated state to a lock mode, the controller 180 determines whether the handwriting input is matched to a pre-set pattern for releasing the lock mode. As discussed above, the controller 180 determines whether the handwriting input is matched to the previously stored image.

Referring to (a) and (c) of FIG. 4E, when the handwriting input is matched to the previously stored image, the controller 180 can control the light output unit 154 to emit light having a particular color. For example, when the handwriting input is matched to a previously stored image, the controller 180 can control the light output unit 154 to emit green light.

When the handwriting input is matched with the previously stored image, the controller 180 releases the lock mode and switches the display unit to an activated state. The controller 180 executes a function based on the control command and controls the display unit 151 to output a call screen 310 according to the function as shown in (d) of FIG. 4E.

Referring to (a) and (b) of FIG. 4E, when the handwriting input is not matched to the previously stored image, the controller 180 can control the light output unit 154 to emit red light. Also, when the applied handwriting input is not recognized as a particular word, the controller 180 can control the light output unit 154 to emit pre-set light. Accordingly, even when the display unit does not output visual information according to a handwriting input, the user can recognize release of the lock mode or an input state of a word.

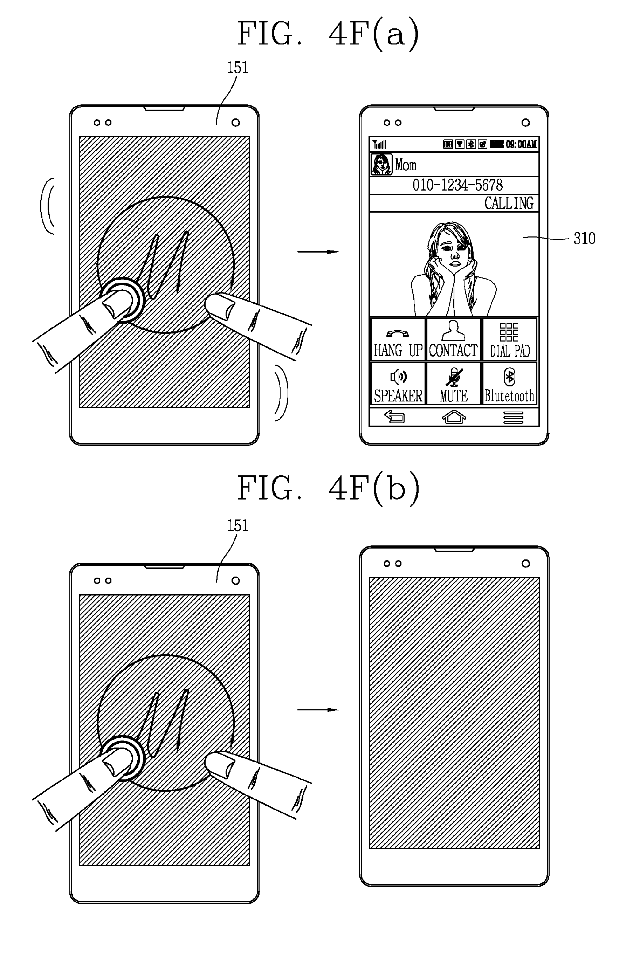

A control method of activating the haptic module according to a handwriting input will be described with reference to FIG. 4F. According to the present embodiment, the display unit 151 is not switched to an activated state by a user's handwriting input. The controller 180 controls the touch sensing unit to sense a user's handwriting input when the display unit 151 when the display unit 151 is deactivated.

Referring to (a) of FIG. 4F, when the handwriting input is sensed and a particular function is executable by the handwriting input, the controller 180 controls the haptic module 153 to generate vibrations. After vibrations are generated, the controller may execute the function and activate the display unit 151.

Referring to (b) of FIG. 4F, when the handwriting input is sensed and a particular function cannot be executable by the handwriting input, the controller 180 does not generate vibrations. Here, when a particular function is not executable includes when a lock mode cannot be released by a handwriting input in the lock mode, when related text cannot be sensed by a handwriting input, when a control command corresponding to a particular function is not sensed by a handwriting input, and the like.

Meanwhile, in (a) and (b) of FIG. 4F, the controller 180 can control the haptic module 153 not to generate vibrations when the particular function is executable, and to generate vibrations when the particular function is not executable. Alternatively, the controller 180 can control the haptic module 153 to generate vibration patterns differentiated in a state in which the particular function is executable or unexecutable.

Thus, the user can recognize, through vibrations or light emission, whether a handwriting input is sensed before a particular function is executed and screen information is output on the display unit 151 or whether the mobile terminal can be driven according to a handwriting input. As discussed above, the display unit 151 in a deactivated state is switched to an activated state based on a pre-set control command.

Next, FIGS. 5A through 5E illustrate a method of controlling a mobile terminal using a tap applied when the display unit 151 is deactivated. Referring to FIG. 5A, when lighting of the display unit 151 is turned off, at least one of the touch sensing unit and the accelerometer is maintained in an ON state. Such a state may be switched to a doze mode based on a particular control command or when a control command is not applied to the mobile terminal for a pre-set period of time.

According to the present embodiment, when a plurality of taps applied to the display unit 151 are sensed by the touch sensing unit or the accelerometer, the controller 180 controls the mobile terminal to be driven based on a user's touch input. Here, the plurality of taps may be sensed by an object that comes into direct contact with the terminal body of the mobile terminal or by an object sufficiently in proximity to the mobile terminal. Alternatively, a portion of the plurality of taps may be formed upon being in direct contact with the terminal body of the mobile terminal, while the other remaining taps may be formed upon being applied to an object in the proximity of the mobile terminal.

A tap directly applied to the terminal body of the mobile terminal may be sensed by the touch sensing unit. When a tap applied to an object in close proximity to the mobile terminal, vibrations generated by the tap may be sensed by the accelerometer.

The controller 180 can analyze a pattern of a tap ("knockknock") sensed by the touch sensing unit or the accelerometer. Referring to FIG. 5A, when taps are applied by a first finger ① → a second finger ② → a third finger ③, the controller 180 can analyze a pattern of the taps based on at least one of the number of times by which the tap has been applied, order of the taps, positions of the taps, a speed of the taps, regions of the taps, types of tap objects, and the number of tap objects, and compares the analyze tap pattern with a pre-set reference pattern. Hereinafter, for the purposes of description, the circular numbers are defined as corresponding to order of taps or differentiated regions on the display unit 151 to which taps are applied.

According to the present embodiment, when the analyzed tap pattern is substantially identical to the reference tap pattern, the controller 180 senses a user's handwriting input applied to the display unit 151 and controls the display unit 151 to output an image according to the handwriting input. Also, when the analyzed tap pattern is substantially identical to the reference tap pattern, the controller 180 can control the display unit 151 to display a first handwriting region 210. In addition, when the display unit 151 in a deactivated state is switched to a locked state, and when the reference taps and the analyzed taps are substantially identical, the controller 180 releases the lock mode and provides control to sense an applied touch.

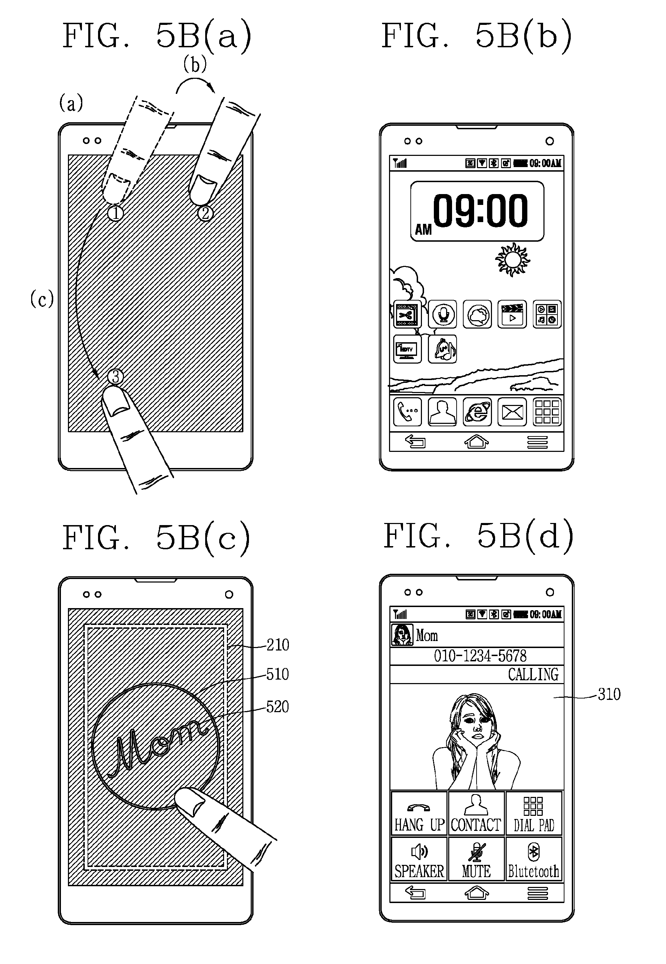

A control method of the mobile terminal based on a tap applied to the mobile terminal will be described with reference to FIG. 5B. The controller 180 can analyze a pattern of the taps applied to a particular region of the display unit 151, and differently control the mobile terminal according to different patterns.

Referring to (a) and (b) of FIG. 5B, the controller 180 divides regions of the display unit 151 and senses taps applied to the regions. For example, when first and second taps ① and ② are sequentially applied, the controller 180 senses the sequentially applied first and second taps ① and ② as a first pattern. Based on the taps applied in the first pattern, the controller 180 can activate the display unit 151 and control the display unit 151 to display a home screen page. However, screen information output based on the first pattern is not limited to the home screen page and various types of screen information may be output according to a user setting.

Referring to (a), (c) and (d) of FIG. 5B, when first and third taps ① and ③ are sequentially applied, the controller 180 senses the sequentially applied first and third taps as a second pattern. Based on the taps applied in the second pattern, the controller 180 activates the display unit 151 and controls the touch sensing unit to receive a handwriting input applied by the user. That is, the display unit 151 can display the first handwriting region 210 defined to receive a user's handwriting input.

Also, the display unit 151 output a first word image 510 and a first pattern image 520 in response to the user's handwriting input as shown in (c) of FIG. 5B. Also, based on the first pattern image 520, the controller 180 drives an application to which related of a word extracted from the first word image 510 is applied. Accordingly, the user can simply activate the display unit 151 by applying a tap to the display unit 151 or may selectively execute a data-applied application.

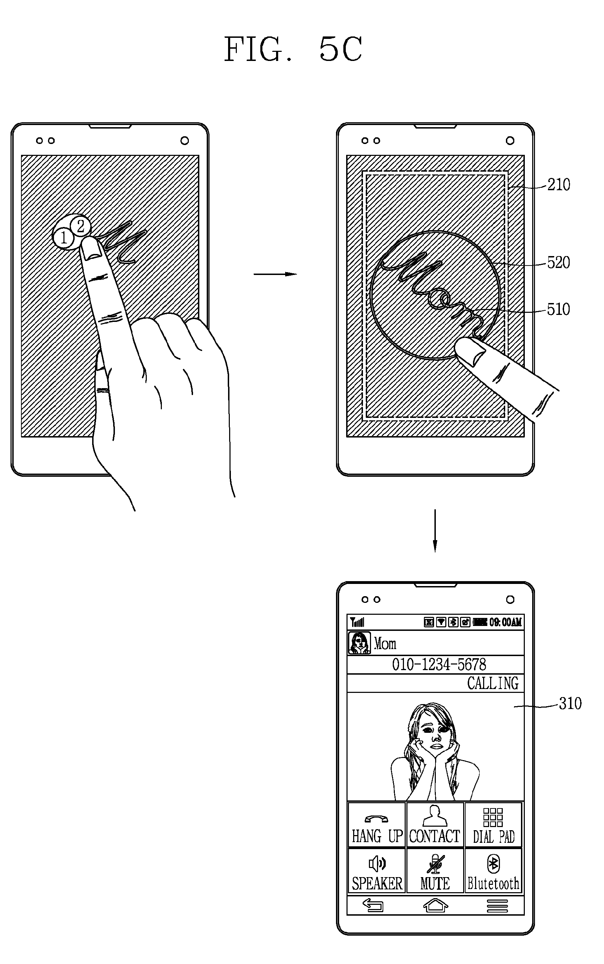

A method of driving an application using a tap according to another embodiment of the present invention will be described with reference to FIG. 5C. Based on the taps ① and ② in a third pattern continuously applied to the substantially same region, the controller 180 activates the display unit 151. Also, the controller 180 can maintain the touch sensing unit in a deactivated state until before the taps are applied. That is, the controller 180 can activate the touch sensing unit based on the tap input in the third pattern and senses a user's handwriting input.

In this instance, the display unit 151 can be activated together with the sensing unit, but the present invention is not limited thereto. For example, when the taps in the third pattern are applied, the controller 180 activates the touch sensing unit to sense a user's handwriting input. Thereafter, when a handwriting input within a preset range is sensed by the touch sensing unit, the controller 180 can activate the display unit 151 and controls the display unit 151 to output an image corresponding to the handwriting input.

Meanwhile, when the taps ① and ② in the third pattern are applied and the second tap ② corresponds to a tap input in contact with the display unit 151, and when the touch input on the display unit 151 is released after the second tap ② is applied, the controller 180 can activate the display unit 151 and controls the display unit 151 to output pre-set screen information (for example, a home screen page, an execution screen of an application, and the like).

Here, when the second tap ② is continuously input to the display unit 151 and the second tap moves to another region, and then the controller 180 senses the touch input as a handwriting input. Thus, the display unit 151 can define a first handwriting region 210 and output an image based on the handwriting input.

Based on the handwriting input, the controller 180 controls the display unit 151 to output a first word image 510 and a pattern image 520, and controls driving of an application based on data searched using a word. According to the present embodiment, since handwriting input is sensed by a pre-set control command (the tap in the third pattern), driving of an erroneous application based on a touch input against the user's will can be prevented. Also, since the touch sensing unit is activated based on the control command, power consumption can be reduced.

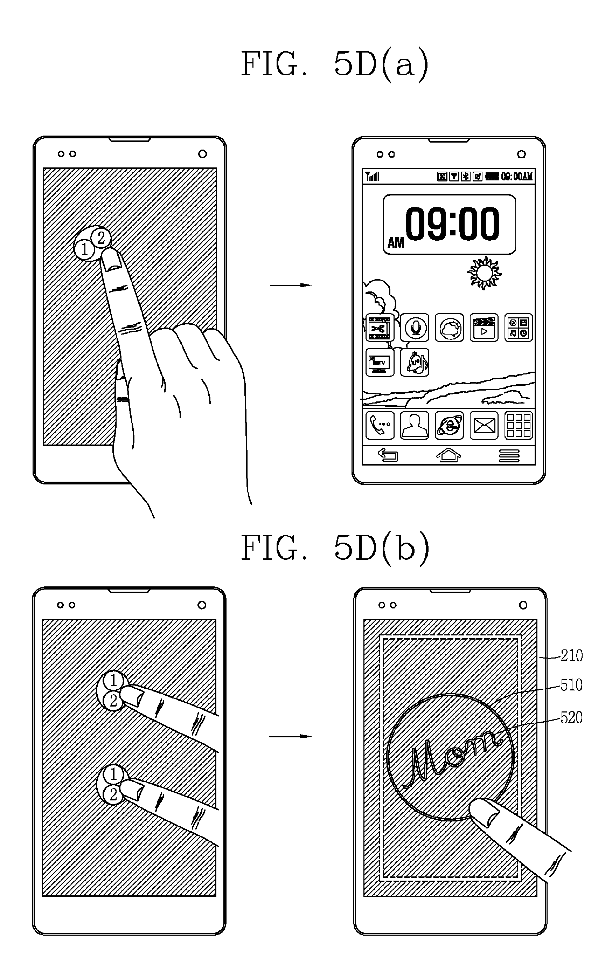

A control method of the mobile terminal based on different patterns will be described with reference to FIG. 5D. Referring to (a) of FIG. 5D, based on taps ① and ② in a third pattern substantially applied as a single tap to the same region, the controller 180 can activate the display unit 151 and controls the display unit 151 to output pre-set screen information. For example, the screen information may be a home screen page, an execution screen of an application, and the like, but the present invention is not limited thereto.

Referring to (b) of FIG. 5D, based on taps ① and ② in a third pattern applied as a multi-tap, the controller 180 receives a handwriting input applied to the display unit 151 and controls the mobile terminal to drive a particular application based on the handwriting input. The touch sensing unit may determine in which region the taps are applied, to determine whether the taps are a single tap or a multi-tap.

In more detail, based on a touch input applied by the multi-tap, namely, taps substantially simultaneously applied to different regions of the display unit 151 by the same number of times, the controller 180 defines a first handwriting region 210 on the display unit 151. The controller 180 activates the touch sensing unit, senses the handwriting input, and activates the display unit 151 to output an image based on the handwriting input.

Further, the controller 180 can extract a word according to the image, and controls the mobile terminal to drive an application by applying data related to the word. According to the present embodiment, only when a pre-set tap input, differentiated from a tap input for a control command for activating the display unit 151, is applied by the user, the mobile terminal drives an application based on the handwriting input. Thus, the mobile terminal may be controlled according to the user's intention.

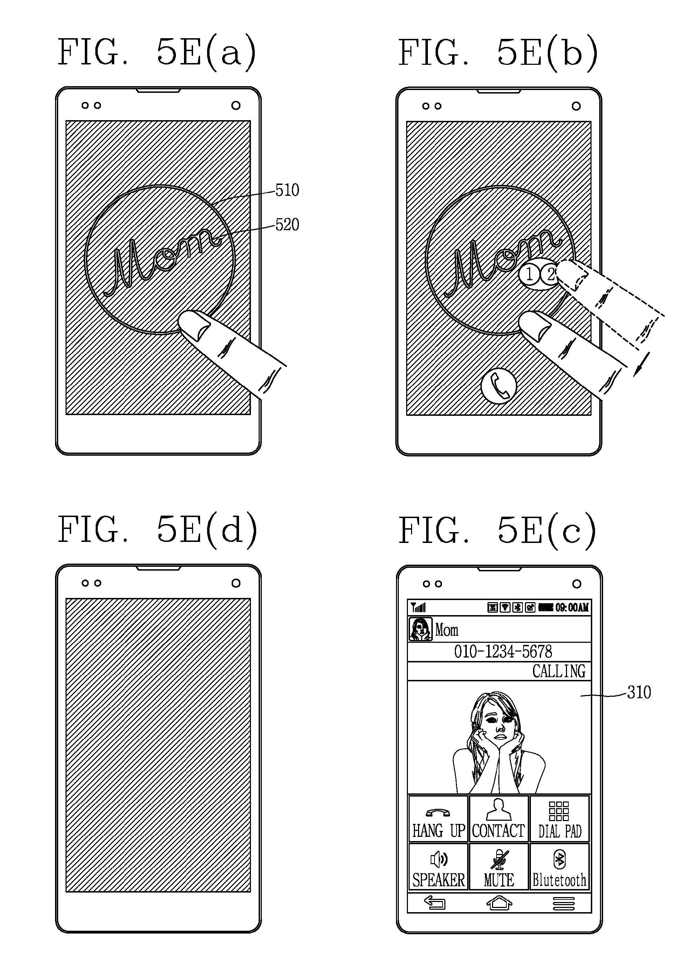

A control method of driving an application according to a tap input will be described with reference to FIG. 5E. The display unit 151 outputs the first word image 510 and the first pattern image 520 based on the handwriting input sensed by the touch sensing unit as shown in (a) of FIG. 5E. The controller 180 controls the display unit 151 to output a graphic image denoting an application executed by the first pattern image 520. Referring to (b) of FIG. 5E, the display unit 151 can output a graphic image denoting a call application corresponding to the circular first pattern image.

When the graphic image is output, and when the taps ① and ② in the third pattern applied to the display unit 151 are sensed, the controller 180 drive the application to which the data has been applied, and control the display unit 151 to output a call origination screen 310 as shown in (c) of FIG. 5E. Further, the controller 180 can control the display unit 151 to output data related to the word. According to the present embodiment, the user can check again an application to be executed based on the touch input, the user can more accurately perform controlling based on a handwriting input.

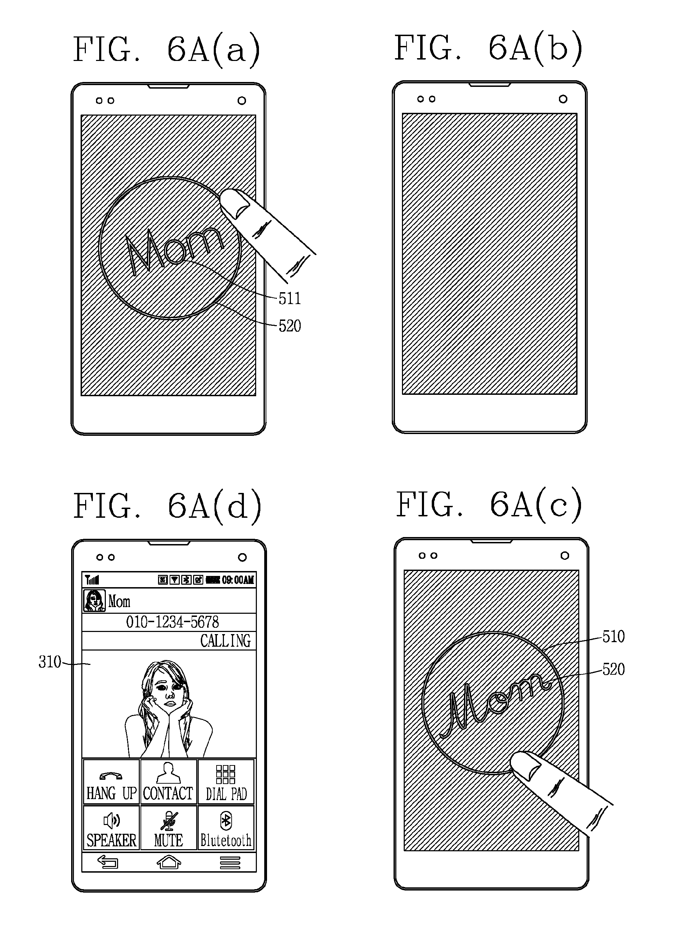

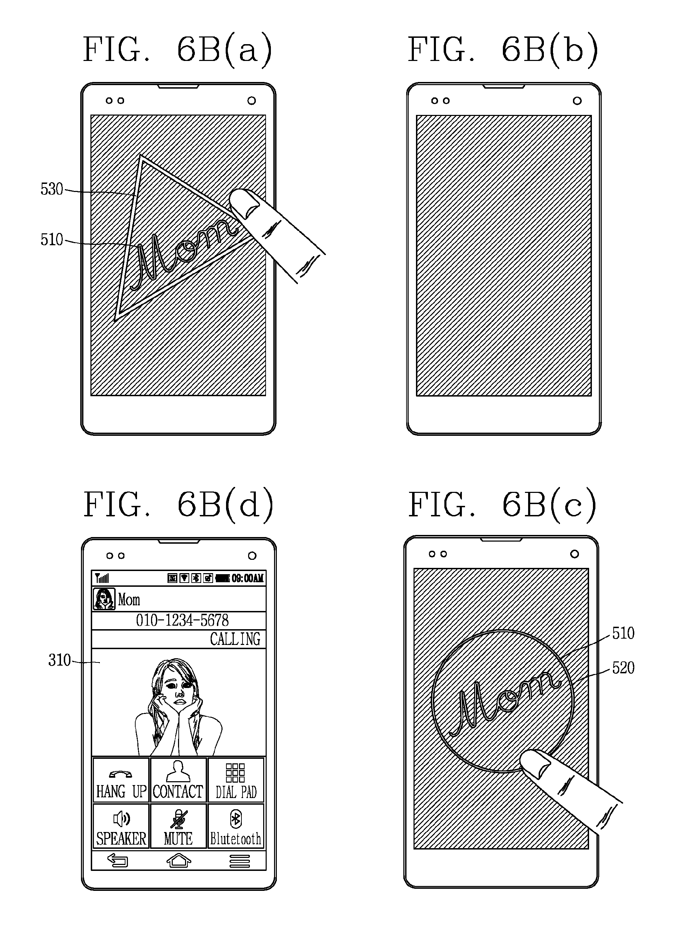

Next, FIGS. 6A and 6B are conceptual views illustrating a control method of executing an application based on a handwriting input when a mobile terminal is in a locked state. Here, the locked state refers to when a portion of control commands by a user is limited when the display unit 151 is in a deactivated state or an activated state. When the display unit 151 is activated in the locked state, the controller 180 outputs a pre-set lock screen, and while the lock screen is being output, the controller 180 applies a particular control command for releasing the locked state, to release the locked state.

FIG. 6A(a) is a view illustrating the display unit 151 outputting a second word image 511 and a first pattern image 520 based on a user's handwriting input. Here, the second word image 511 has a shape differentiated from the first word image 510. Namely, the first and second word images 510 and 511 have different writings but correspond to a word having the substantially same meaning.

Referring to (a) and (b) of FIG. 6A, even though a handwriting input forming the second word image 511 and the first pattern image 520 is applied, the controller 180 does not execute a particular application. That is, when the handwriting input of the second word image 511 having a shape different from that of the first word image 510 is applied, the controller 180 can control the mobile terminal to disregard the applied handwriting input.

When a handwriting input corresponding to the first word image 510 and the first pattern image 520 is applied, the controller 180 releases the locked state and drives an application corresponding to the first pattern image 520 using data related to a word extracted from the first word image 510 as shown in (c) and (d) of FIG. 6A.

According to the present embodiment, the controller 180 recognizes a word image according to a handwriting input applied to the display unit 151 as an image having a particular shape, and compares the image having a particular shape with a key image. Here, the key image is an image for releasing the locked state and may be stored in the memory. The controller 180 compares the key image with the second word image 511, and when the key image and the second word image 511 are not identical, the controller 180 does not release the locked state.

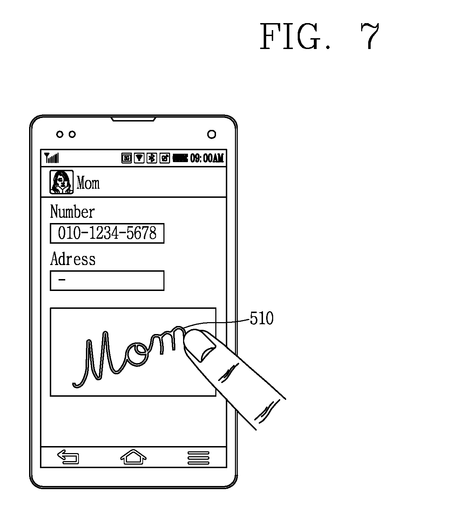

As illustrated in (b) of FIG. 6A, the controller 180 can control the display unit 151 to make the image which has been output by the handwriting input disappear. That is, the controller 180 can switch the display unit 151 to the deactivated state. Alternatively, the controller 180 can control the display unit 151 to output a pre-set lock screen. FIG. 6B will be described in detail with respect to FIG. 7.

In particular, FIG. 7 is a conceptual view illustrating an embodiment of storing a key image. FIG. 7 illustrates an execution screen of an address list application for inputting information of an external terminal. The execution screen includes a word image 510 of a handwriting corresponding to the external terminal and formed by user's handwriting input. That is, the memory stores the word image 510 together with the information (a phone number, a representative name, a representative photo image, an address, birthday, and the like) of the external terminal. For example, the word image 510 may correspond to handwriting of a word having a meaning substantially identical to the representative name. Preferably, the word image 510 is formed in handwriting of the user of the mobile terminal.

Here, the key image may correspond to the word image 510, and a plurality of key images may be formed according to stored address list data. That is, when a handwriting input forming a word image in a form different from that of a word image formed in the user's handwriting is applied, the controller 180 does not release the locked state.

Namely, when a user's handwriting input is sensed in the locked state and an image thereof is identical to the key image, the controller 180 drives the application without performing a step of releasing the locked state. When the input word image is substantially identical to the key image, the controller 180 can extract a word of the input word image. Alternatively, without performing a step of extracting the word, the controller 180 can search for data including the word image stored in the memory. Thus, the user can release the locked state by using a registered handwriting of him or her and simply drive an application.

A control method of releasing a locked state based on a handwriting input forming a pattern image in a locked state and executing an application will be described with reference to FIG. 6B. The display unit 151 outputs a first word image 510 and a third pattern image 530 based on a user's handwriting input in a locked state. The controller 180 determines whether the third pattern image 5300 is identical to the key image.

The key image according to the present embodiment may be formed as pattern images corresponding to particular applications to execute the applications, and the memory 170 stores the pattern images respectively corresponding to applications. The controller 180 can extract the word from images formed by the handwriting input, and determine image not corresponding to the word (i.e., the third pattern image 530) is substantially identical to the key image. Key images respectively corresponding to the applications may be set by the user.

When the third pattern image 530 is not identical to the key image, the controller 180 does not release the locked state and limits execution of an application as shown in (a) and (b) of FIG. 6B. Referring to (c) and (d) of FIG. 6B, when the first pattern image 520 is formed based on a handwriting input applied to the display unit 151 and the first pattern image 520 is substantially identical to the key image defined by the user, the controller 180 releases the locked state and executes the application.

That is, a handwriting input forming a particular pattern image, among handwriting inputs applied to the display unit 151, is a control command for executing a particular application and control command for releasing a locked state. Thus, an application can be simply driven by using an input word without issuing a separate control command for releasing the locked state, while limiting the use of the mobile terminal by someone else.

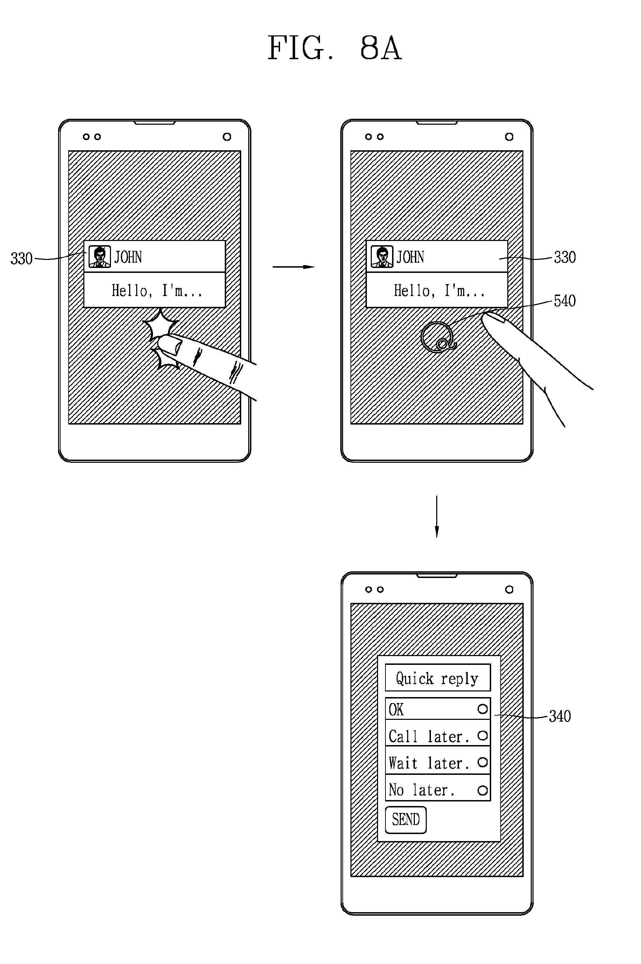

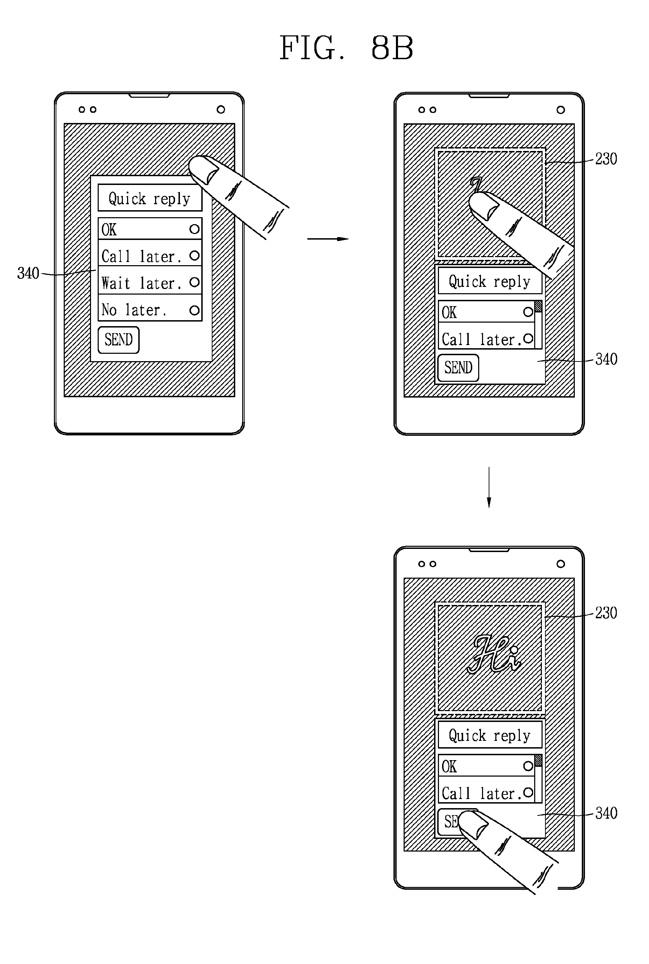

FIGS. 8A and 8B are conceptual views illustrating a control method of an application by a handwriting input when an event is received. When a particular event is received, the display unit 151 outputs a pop-up window 330 denoting information of the event. The controller 180 executes an application related to the event based on a handwriting input applied to the pop-up window 330, and controls the display unit 151 to output information of the event.

Referring to FIG. 8A, the controller 180 controls the touch sensing unit to sense a user's handwriting by a tap applied to the display unit 151. When the handwriting input forms a fourth pattern image 540, the controller 180 controls the display unit 151 to output a list 340 for a simple reply. Here, the fourth pattern image 540 may be formed in the form of a character. For example, the fourth pattern image 540 may be formed as the alphabet Q.

The controller 180 can control the display unit 151 to activate the display unit 151 overall and output the list 340 including acknowledgement data for a simple reply, or output only the list 340 without outputting any other screen information. For example, the event may correspond to a message received from the outside. In response to the received event, the controller 180 can control the wireless communication unit 110 to transmit information selected from the list 340 to an external terminal which has transmitted the event. Accordingly, when the event is received, the user can apply a handwriting input of a pre-set pattern to the display unit 151 to receive information related to the event, and execute a function related to the event.

Referring to FIG. 8B, when the list 340 is output, the controller 180 can form a second handwriting region 230 based on a user's touch. The second handwriting region 230 may be formed based on a region of the display unit 151 to which the touch input has been applied. The display unit 151 can display the second handwriting region 230.

Also, the display unit 151 can output the list 340 together with the handwriting region 230, and a position of the display unit 151 to which the list 340 is output may be changed. The controller selects information based on a touch input applied to the list 340, or receives a word, or the like, based on a touch input applied to the handwriting region 230. That is, the controller 180 controls the display unit 151 to output an image corresponding to a handwriting input applied to the handwriting region 230.

The controller 180 extracts a word from the image, and in a state in which the image is output, the controller 180 controls the wireless communication unit 110 to transmit the word based on a touch input applied to an icon for transmitting the word. However, the present invention is not limited thereto and the controller 180 can control the wireless communication unit 110 to transmit the word image itself.

According to the present embodiment, when a pop-up window is output to the display unit 151 in a deactivated state, a particular function of an application related to an event may be executed without having to output an execution screen of the application.

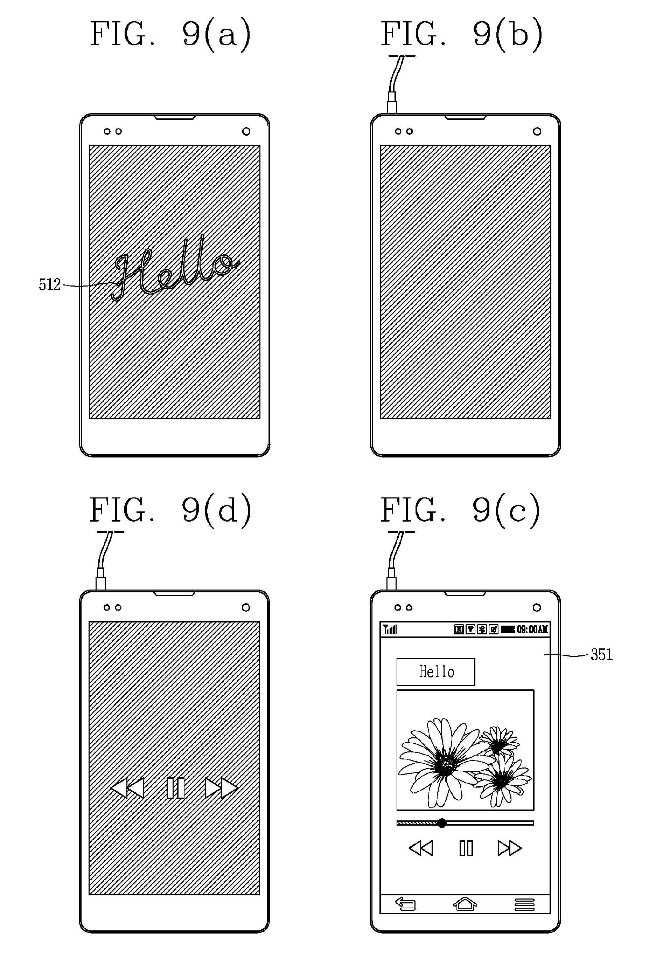

FIG. 9 is a conceptual view illustrating a control method of playing media based on a handwriting input. Referring to (a) of FIG. 9, the controller 180 controls the display unit 151 to output a third character image 512 corresponding to a handwriting input. The controller 180 senses an earphone connected to the interface unit 160 (earphone port) and extracts a word from the handwriting input sensed by the touch sensing unit.

Also, the controller 180 searches for related data using the extracted word as a search word. Using the word, the controller 180 can search for media data related to the word from the memory 170. Alternatively, the controller 180 can search for media data related to the word from a pre-set server using the word as a search word. Here, the media data may correspond to a music file, a video file, a voice, file, or the like, having the word as a title.

That is, according to the present embodiment, the sensing of the earphone connected to the interface unit (or a signal indicating that the earphone connected to the interface unit has been sensed) corresponds to a control command for driving an application to play media data.

Referring to (b) of FIG. 9, the controller 180 maintains the display unit 151 in a deactivated state, and controls the interface unit 160 to output the data. Referring to (c) of FIG. 9, when the data is searched, the controller 180 executes an application for playing (reproducing) the data, and drives the application to play the data. Also, the controller 180 activates the display unit 151 and controls the display unit 151 to output a play screen 351 for playing the data.

In addition, referring to (d) of FIG. 9, the controller 180 drives the application to play the searched data, and controls the display unit 151 to output only a graphic image indicating that the data is being output. That is, the controller 180 cannot output the play screen 351. When a pre-set period of time has lapsed, the controller 180 can control the display unit 151 to be limited in outputting of the graphic image, and control the display unit 151 to be switched to a deactivated state.

In addition, the controller 180 can control the display unit 151 to be maintained in the deactivated state. Accordingly, the user can simply play media data without having to perform a step of executing an application and a step of searching for media data.

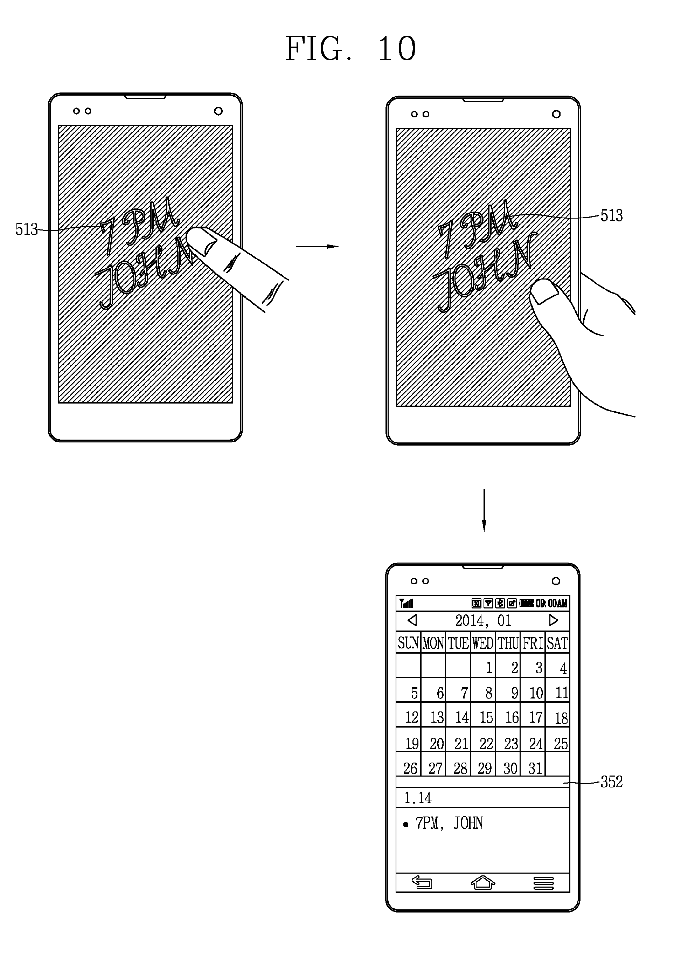

FIG 10 is a conceptual view illustrating a control method of storing schedule data based on a handwriting input. Based on a handwriting input sensed by the touch sensing unit, the controller 180 controls the display unit 151 to output a fourth word image 513 corresponding to the handwriting input.

When the handwriting input by a pre-set finger, the controller 180 executes a calendar application and drives the application such that a word extracted from the fourth character image 513 is stored as schedule data. According to the present embodiment, the mobile terminal further includes a fingerprint recognition sensor for recognizing a fingerprint. The fingerprint recognition sensor may be formed in an upper portion of the display unit 151. The fingerprint recognition sensor may be configured to correspond to the front surface of the display unit 151, but the present invention is not limited thereto. For example, the fingerprint recognition sensor may be formed only in a lower region of the display unit 151.

Here, a particular finger may be designated by a user setting. For example, when a touch input by the user's thumb is applied to the display unit 151, the controller 180 can execute the calendar application. The touch applied by the user's thumb may be sensed by the fingerprint recognition sensor and a fingerprint of the user's finger may be stored in the memory 170. Also, the controller 180 can execute the application based on a touch range by the user's finger.

When the touch input applied by the pre-set finger is released, the controller 180 provides control such that the schedule data is stored by the calendar application. Also, the controller 180 controls the display unit 151 to output an execution screen 352 of the calendar application storing the schedule data.

In addition, the controller 180 can analyze a type of the word of the fourth word image 513, and store analyzed data as schedule data. That is, the controller 180 can differentiate a date, a time, a place, a name, and the like, in the word, and drives the application to store the schedule data together with particular date information. Accordingly, the user can perform the process of executing the application and inputting data, as a simple process.

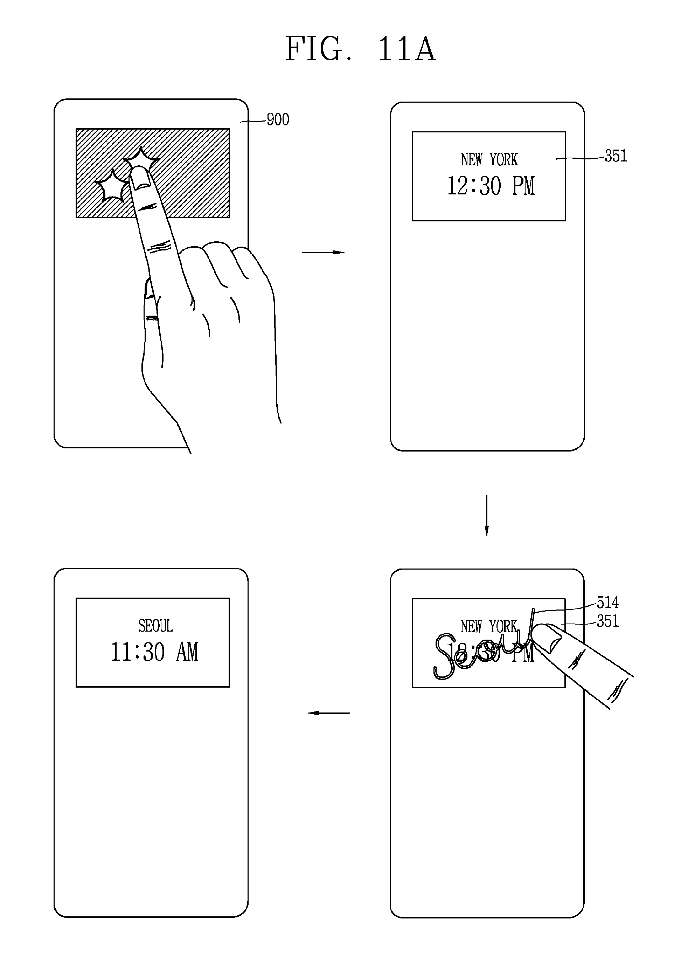

FIGS. 11A through 11C are conceptual views illustrating a control method of a mobile terminal with a cover unit installed thereon. A cover unit 900 according to the present embodiments implements a closed state in which the cover unit covers the display unit 151, and an open state in which the cover unit 900 exposes the entire region of the display unit 151. Also, the cover unit 900 includes an opening region exposing one region of the display unit 151 in the closed state. When a particular control command is applied in the closed state, the controller may activate at least one region of the display unit 151 and provide control to output particular screen information through the opening region.

Referring to FIG. 11A, the controller 180 can control the display unit 151 to output first screen information 351 based on a control command in the closed state. Here, the control command may correspond to a tap input applied to the mobile terminal, but the present invention is not limited thereto.

The first screen information 351 may include time information of a first area. While the first screen information 351 is being output, the controller 180 controls the touch sensing unit to sense a user's touch input. Also, the controller 180 controls the display unit 151 to output a fifth word image corresponding to the handwriting input. The fifth word image 415 is output to overlap the first screen information 351.

The controller 180 extracts the word based on the handwriting input, and searches for data based on the extracted word and the first screen information 351. The controller 180 controls the display unit 151 to output other screen information including the data. For example, the word may correspond to SEOUL, and the controller 180 searches for time information of the Seoul area based on the first screen information 351. The controller 180 can control the display unit 151 to output time information of the Seoul area.

That is, while the screen information including information regarding a time is being output, the controller 180 can recognize an extracted word extracted based on a handwriting input, as information regarding an area for searching for time information. Thus, the user can be instantaneously provided with desired time information, without having to change an area setting for receiving time information.

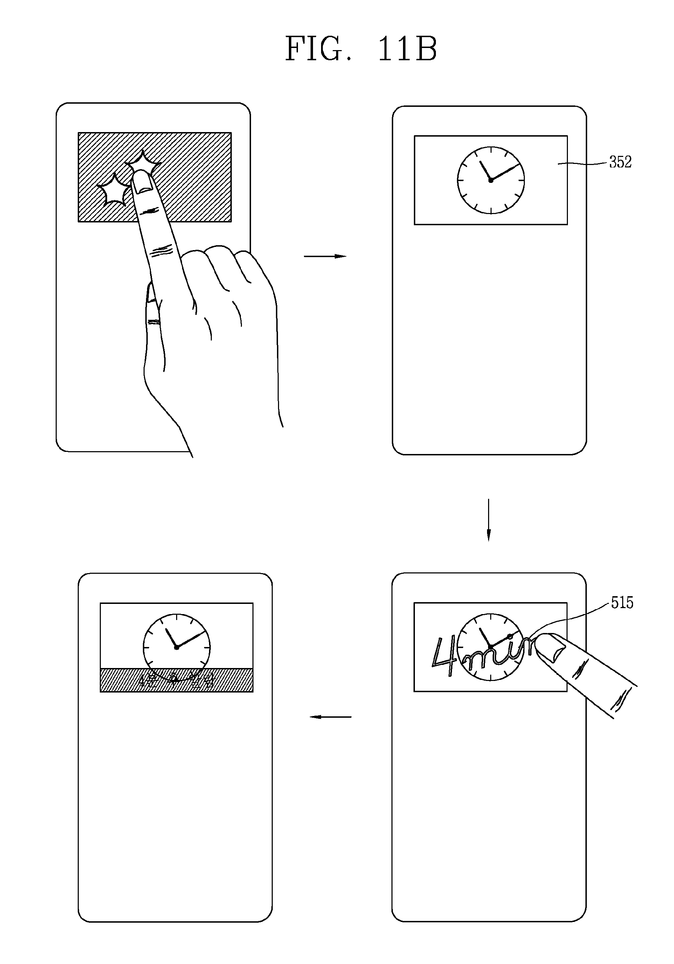

Referring to FIG. 11B, the controller 180 controls the display unit 151 to output second screen information 352 to an opening region based on the particular control command. The second screen information 352 may include an image denoting a current time as a clock shape. While the second screen information 352 is being output in the closed state, the controller 180 activates the touch sensing unit to sense a touch input applied to the display unit 151. The controller 180 controls the display unit 151 to output a sixth word image 515 to the second screen information 352 based on the handwriting input. The controller 180 can extract the word based on the handwriting input and drive an alarm application based on the word.

For example, the controller 180 can extract a word "4 min" based on the handwriting input applied to the display unit 151. Based on the word and the second screen information 352, the controller 180 can drive the alarm application such that alarm goes off in four minutes. Accordingly, the user can set the alarm simply without having to change the cover unit into an open state.

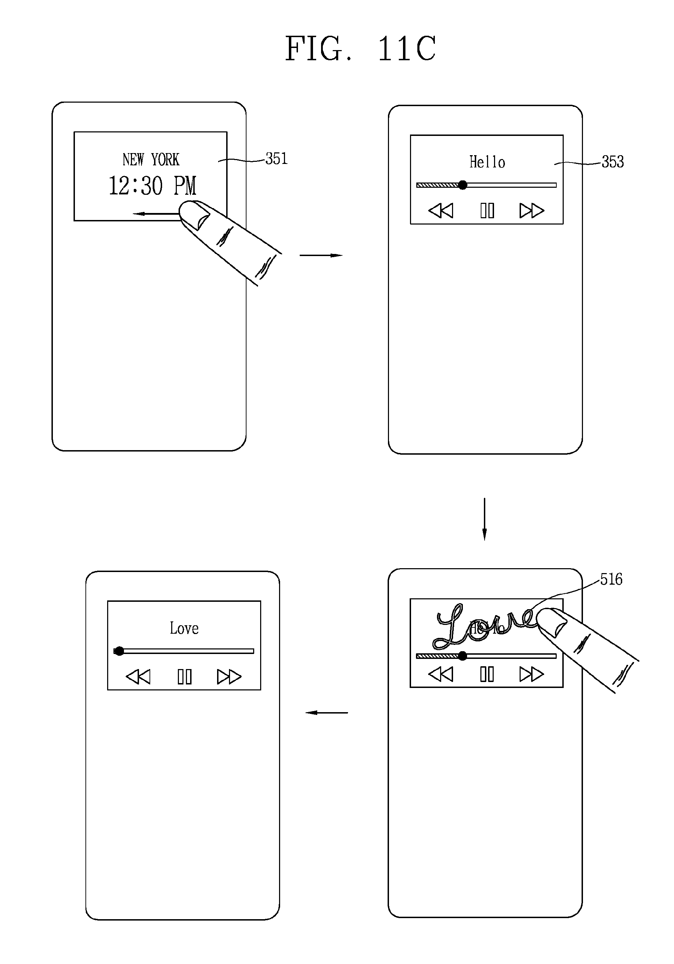

Referring to FIG. 11C, based on a dragging type touch input applied to the first screen information 351, the controller 180 controls the display unit 151 to switch the first screen information 351 to a third screen information 353. The third screen information 353 may correspond to play screen information for playing music data, and the play screen may include information (a title, a singer, an image, or the like, of music) of played music data (or music data on standby to play), a play bar, and a control icon for receiving a touch input to control playing, and the like. Also, the third screen information 353 may be information executing a play application for playing a media file.

While the third screen information 353 is being output in the closed state, the controller 180 can control the play application to play other music based on a handwriting input applied to the display unit 151. Accordingly, the user can search for and output desired music, without having to change the cover unit into an open state. According to the present embodiment, the user can drive an application by applying a handwriting input, while an execution screen of the application is being provided in the closed state of the cover unit. Thus, the user can be provided with desired information easily.

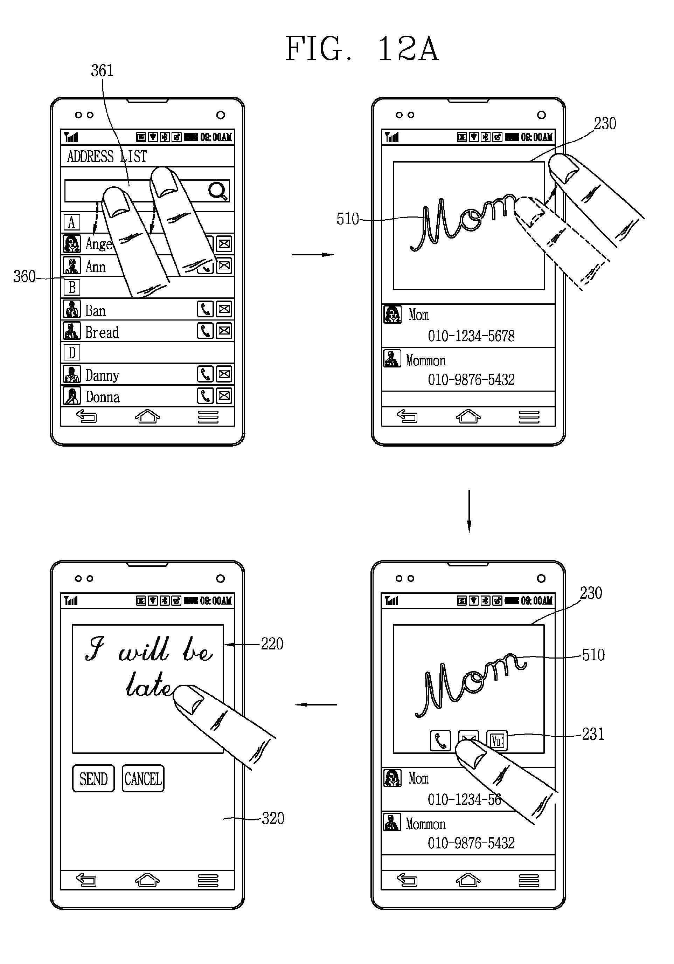

FIGS. 12A through 12D are conceptual vies illustrating a method for controlling an address list application based on a handwriting input. Here, a handwriting input is defined as a touch input applied to the display unit 151 according to a user intention to input a word. That is, an image corresponding to the handwriting input may be applied to form a word.

A control method of an application according to previously stored data based on a handwriting input will be described with reference to FIG. 12A. The display unit 151 outputs a third execution screen 360 of the address list application. The third execution screen 360 includes a search window 361 for receiving input of a word desired to be searched. Also, the third execution screen 360 may include some data, stored in the memory 360, in an arranged state based on a pre-set reference. For example, the controller 180 can control the display unit 151 to output a word corresponding to a representative name among the data in alphabetical order.

In addition, when a touch input is applied to the search window 361, the controller 180 controls the display unit 151 to output a virtual keyboard for receiving a touch input to input a word. Meanwhile, when a particular touch input is applied to the search window 361, the controller 180 controls the display unit 151 to output a second handwriting window 230.

The second handwriting window 230 is output to a region of the display unit 151 and an output region of the third execution screen 360 is changed. For example, the controller 180 can control the display unit 151 to output the second handwriting window 230 to one region of the display unit 151 and output a portion of the representative name to the other remaining region of the display unit 151. The second handwriting window 230 may be output to have a pre-set size and may be changed by a user setting.

Here, the particular touch input is differentiated from a touch input outputting the virtual keyboard. For example, the particular touch input may correspond to a dragging type touch input applied in a multi-touched state. That is, when a multi-touch input is applied to the search window 361, the controller 180 limits output of the virtual keyboard, and controls the display unit 151 to output the second handwriting window 230 by a touch input continuously applied in a dragging manner.

The controller 180 controls the touch sensing unit to sense a handwriting input applied to the second handwriting window 230, and controls the display unit 151 to output a first word image 510 corresponding to the handwriting input. That is, the controller 180 senses the touch input applied to the second handwriting window 230, as a handwriting input.

The controller 180 extracts a word by the handwriting input forming the first word image 510 to the second handwriting window 230, and searches for data related to the word. The controller 180 searches for data including the word from the memory 170. The controller 180 can control the display unit 151 to output a portion of the data including the word to the other remaining region of the display unit 151. Also, the controller 180 controls the display unit 151 to output a first icon 231 of an application to be driven by applying the data. The first icon 231 may be output to overlap the second handwriting window 230 or may be output to the other remaining region.

Based on a touch input applied to the first icon 231, the controller 180 can drive a corresponding application based on the word. For example, the application corresponding to the icon may include a call application, a message application, a video call application, a chatting application, or the like. The controller 180 executes the application based on a touch input applied to the icon. For example, when the message application is executed, the controller 180 control the display unit 151 to output a first execution screen 320. The first execution screen 320 may include a first handwriting window 220 for receiving the handwriting input. That is, the user can apply a handwriting input to the first handwriting window 220 to input a message desired to be sent.

Accordingly, since the user can search for data through a handwriting input, the user can be provided with desired information simply, relative to inputting a word through a virtual keyboard, and the application to which the data is applied can be more simply driven.

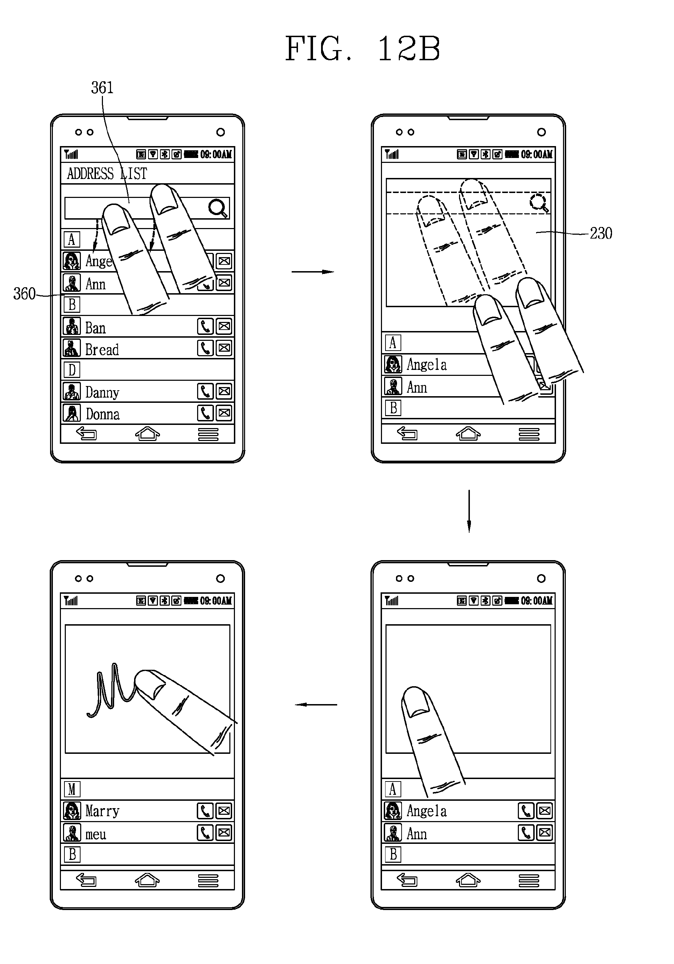

Referring to FIG. 12B, based on a touch range of a multi-touch input applied to the search window 361 and a continuously applied dragging type touch input, the controller 180 can adjust a size of the second handwriting window 230. That is, the user can be provided with a desired second handwriting window 23 based on the dragging input.

Also, although it is illustrated that, as the size of the second handwriting window 230 is increased, information output to the other remaining region is gradually reduced, but the controller 180 can control the display unit 151 to output one region of the third execution screen 360 and the second handwriting window 230 in an overlapping manner. Accordingly, the user can be provided with a search window having a sufficient space for a handwriting input.

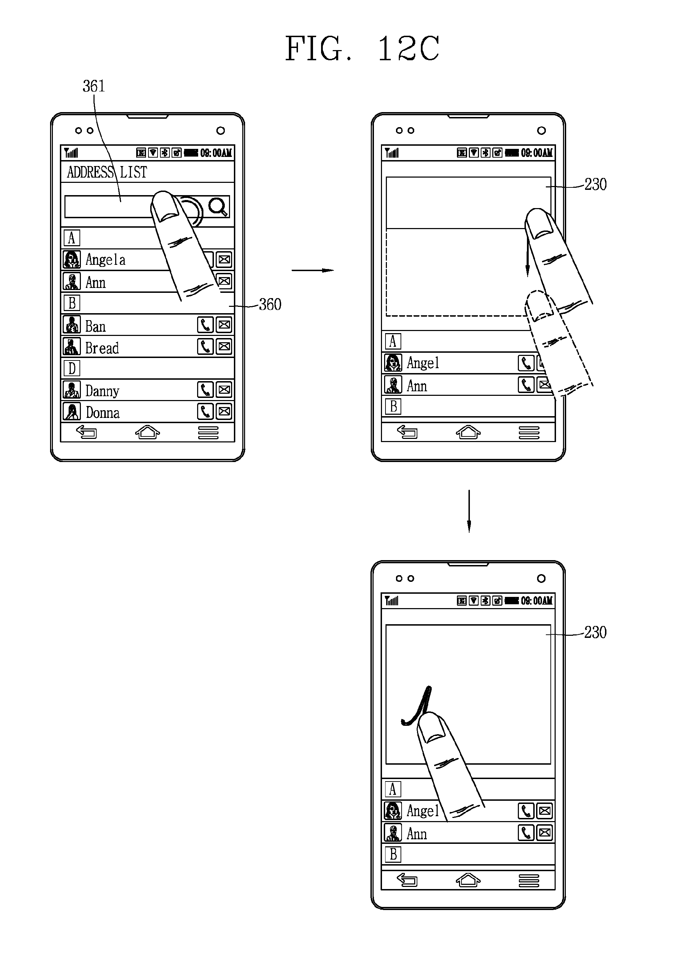

A control method of changing a width of the second handwriting window 230 will be described with reference to FIG. 12C. According to the present embodiment, the particular touch input may correspond to a long touch input applied to the search window 361. Based on the long touch input, the controller 180 can control the display unit 151 to output the second handwriting window 230 having a pre-set size. Based on a dragging type touch input applied to one region of the second handwriting window 230, the controller 180 can control the display unit 151 to change the size of the second handwriting window 230.

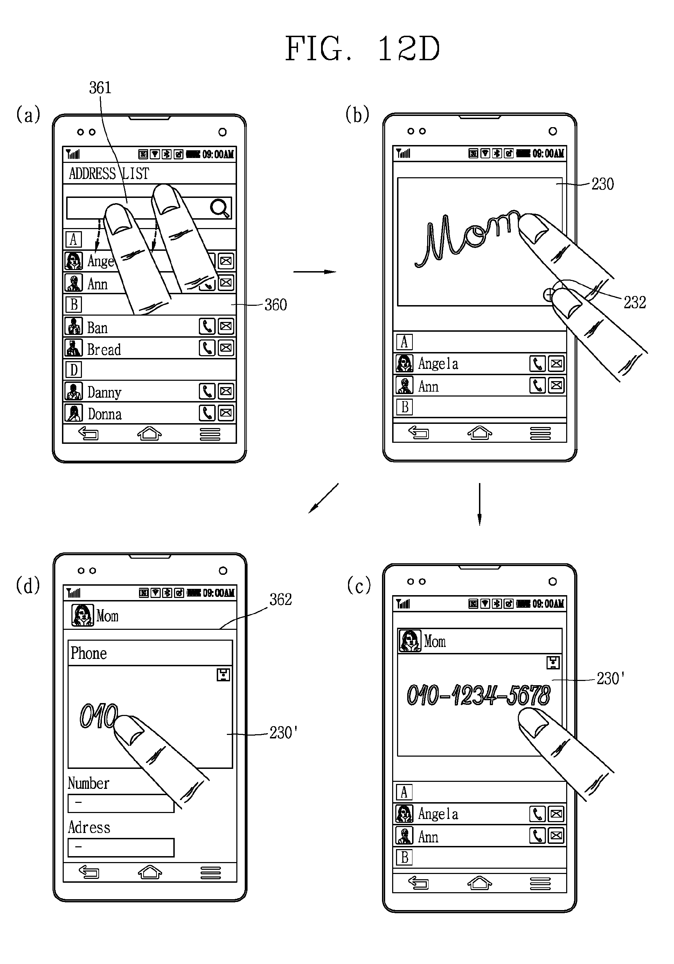

A control method of storing data based on a handwriting input will be described with reference to FIG. 12D. Based on a particular touch input applied to the search window 361, the controller 180 controls the display unit 151 to output the second handwriting window 230 as shown in (a) and (b) of FIG. 12D. When data related to a word based on a handwriting input applied to the second handwriting window 230 is not found, the controller 180 controls the display unit 151 to output a second icon 232 for receiving a touch input to store data.

Referring to (c) of FIG. 12D, the controller 180 extracts a word according to the handwriting, designates the word as a representative name, and subsequently controls the display unit 151 to output an additional handwriting window 230'. However, when the word based on the handwriting input is numbers, the numbers may be designated as a phone number, or the like. The controller 180 can input data to be stored together with the representative name by a handwriting input applied to the additional handwriting window 230'.

Referring to (d) of FIG. 12D, based on a touch input applied to the second icon 232, the controller 180 controls the display unit 151 to output a fourth execution screen 362 of the address list application. The fourth execution screen 362 includes input regions for inputting data and includes the extracted word as a representative name. Accordingly, when data related to a word is not searched, the user can store data together with the word in a handwriting input manner.

In the above, the method of receiving a touch input applied to the display unit 151 and driving a corresponding application has been described. Hereinafter, a control method of outputting a handwriting window defined to receive a touch input will be described.

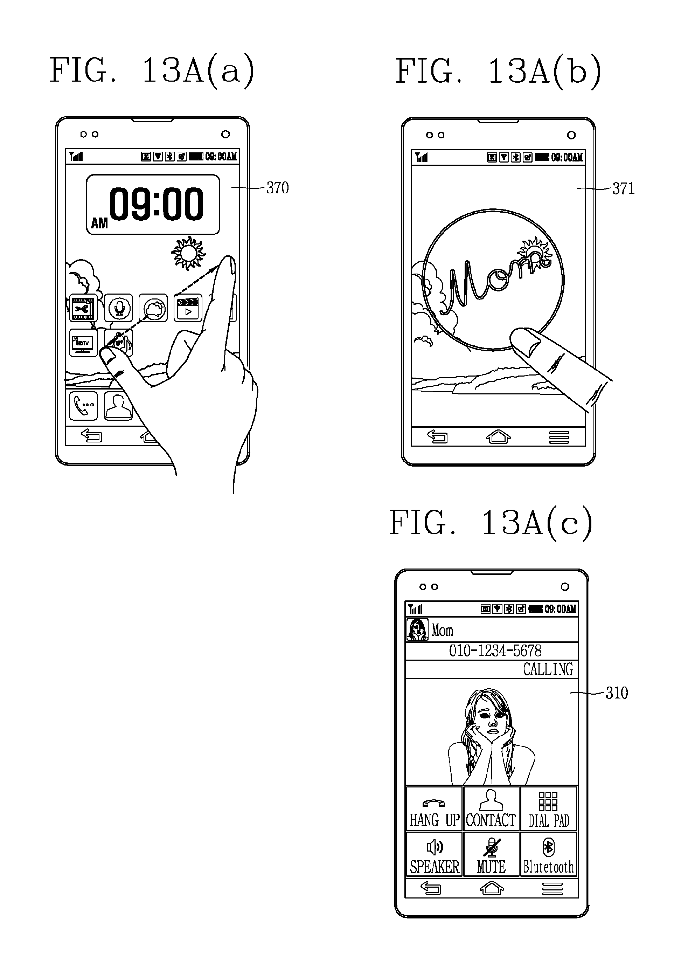

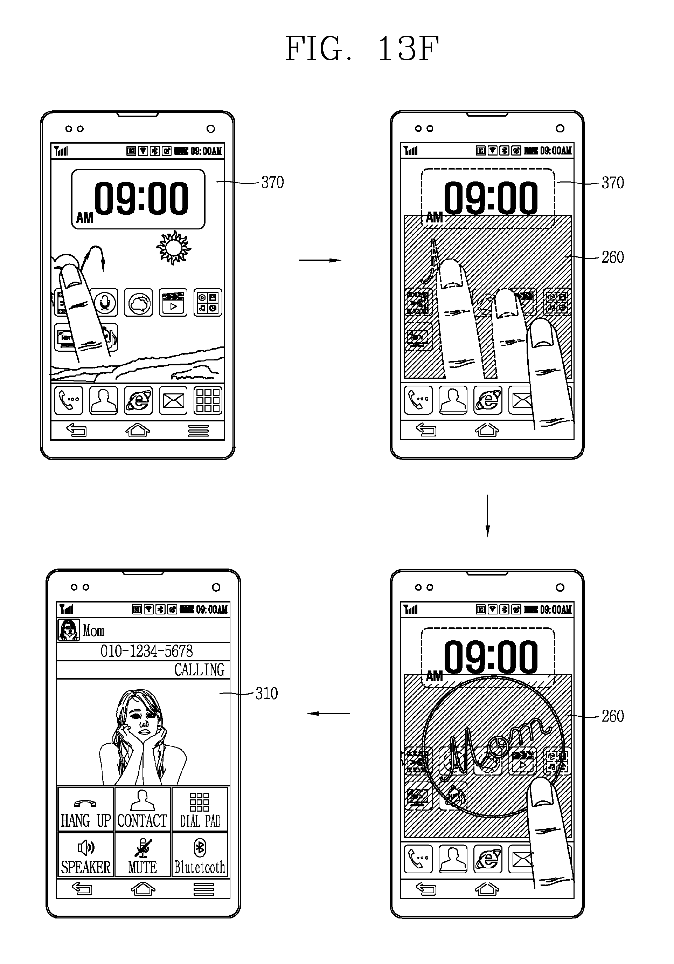

FIGS. 13A through 13I are conceptual views illustrating a control method of outputting a handwriting window or defining a handwriting region according to various embodiments of the present invention. In particular, (a) of FIG. 13A illustrates the display unit 151 outputting a home screen page 370. The home screen page 370 includes a background image set by the user and may include icons overlapping one region of the background image and arranged by a pre-set layout.

When a particular touch input is applied to the display unit 151, the controller 180 controls the display unit 151 to limit output of the icons and display only the background image. Here, the particular touch input may correspond to a pinch-in touch input. Here, the pinch-in touch input refers to a type of touch input based on a scheme in which two touch inputs move in a direction away from one another. For example, the controller 180 can limit output of the icons based on a degree at which two fingers widen in the pinch-in touch input.

Based on the pinch-in touch input, the controller 180 can adjust transparency of the icons or controls the display unit 151 to display the icons such that the icons move toward the edge of the display unit 151 so as to be output and disappear. The controller 180 can define the region of the display unit 151 on which only a background image is output, as a third handwriting region 371. That is, the controller 180 senses a touch input applied to the third handwriting region 371 and controls the display unit 151 to output an image corresponding to the touch input onto the background image as shown in (b) of FIG. 13A.

Also, based on the handwriting input forming the image, the controller 180 executes an application based on particular data as shown in (c) of FIG. 13A. That is, since the user can simply apply a handwriting input to the home screen page, even when various types of content receiving a touch input are output to the display unit 151, the user can drive an application by using a handwriting input.

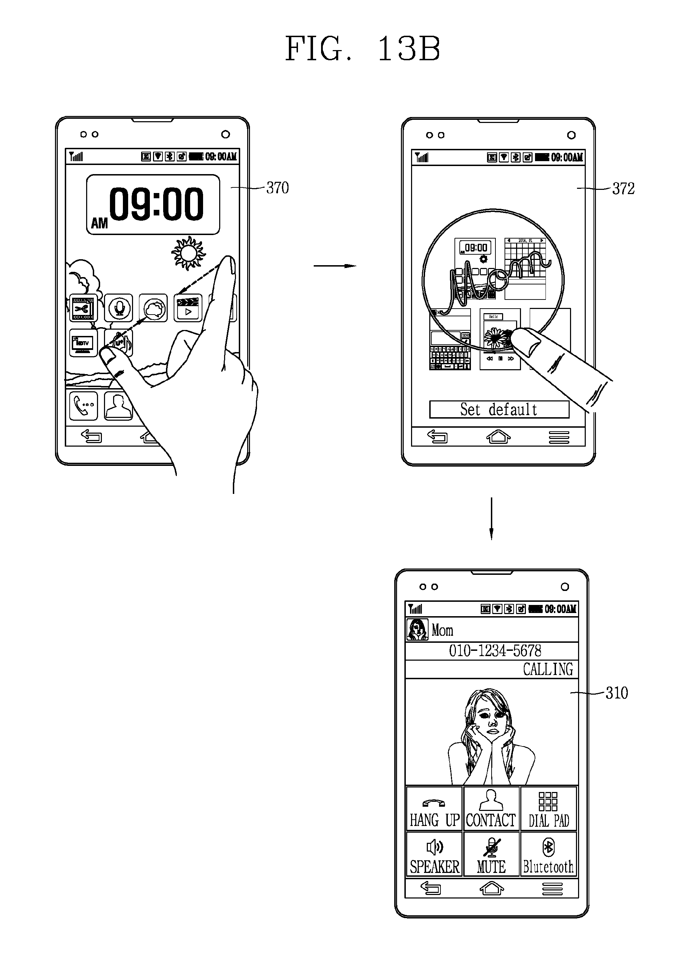

Referring to FIG. 13B, based on a pinch-out touch input, the controller 180 controls the display unit 151 to output a first editing screen 372. Here, the pinch-in touch input refers to a touch input based on a scheme in which two touch inputs move in a direction away from one another. The first editing screen 372 includes at least one home screen page and outputs a plurality of home screen pages together. Based on touch inputs applied to the home screen pages, the controller 180 can set output order of the home screen pages, set a basic page among the home screen pages, delete the home screen page, and the like.

According to the present embodiment, the controller 180 defines the first editing screen 372 as a fourth handwriting region. That is, the controller 180 applies a long touch input to content items included in the first editing screen 372 to edit the content items. However, based on a handwriting input applied to the first editing screen 372, the controller 180 controls the display unit 151 to output an image on the first editing screen 372. Also, the controller 180 drives an application using data according to the handwriting input outputting the image.

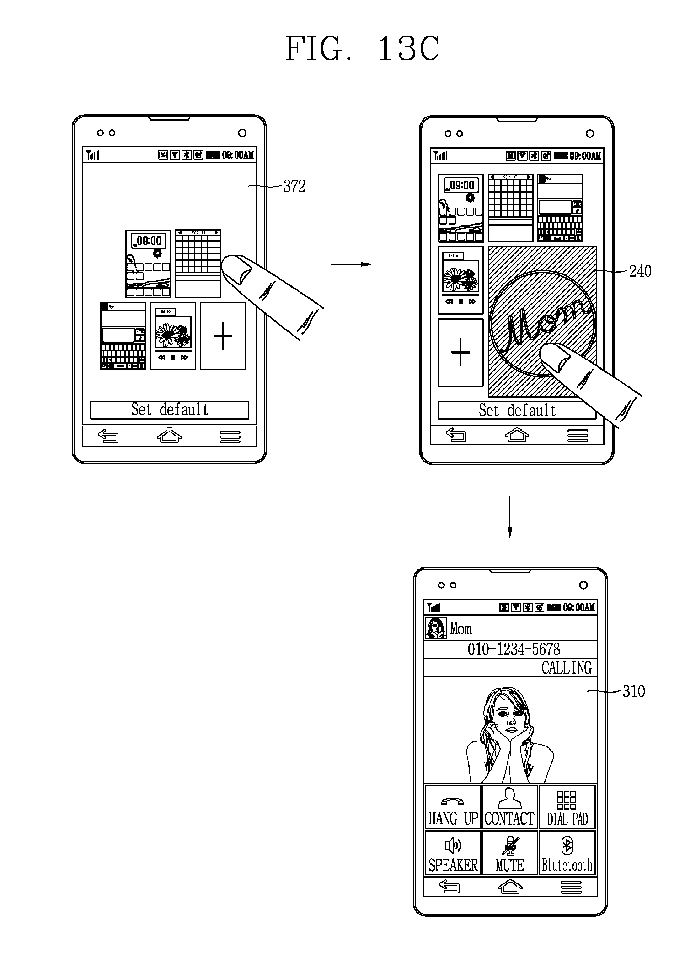

Referring to FIG. 13C, the display unit 151 outputs the first editing screen 372 including content items respectively representing home screen pages. Based on a touch input applied to the other remaining region of the first editing screen 372 on which the content items are not output, the controller 180 controls the display unit 151 to output a third handwriting window 240. The third handwriting window 240 is formed to have a pre-set size based on one region of the display unit 151 to which the touch input has been applied.

Meanwhile, the controller 180 controls the display unit 151 to move output positions of the content items, and the content items and the third handwriting window 240 are output such that they do not overlap. Based on a touch input applied to the third handwriting window 240, the controller 180 drives an application using particular data. That is, the user can control the mobile terminal by differentiating a touch input and a handwriting input applied to content items in the editing screen for editing a home screen page.

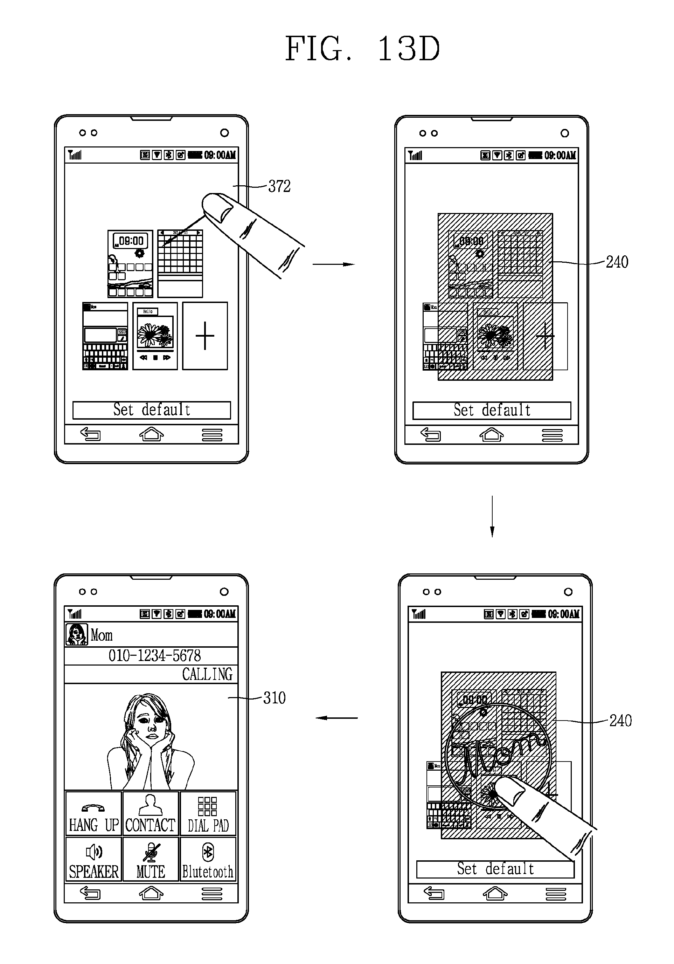

Referring to FIG. 13D, based on a touch input applied to the other remaining region of the first editing screen 372, the controller 180 controls the display unit 151 to output the third handwriting window 240 formed to overlap the content items. A touch input according to the present embodiment may correspond to a dragging input. The controller 180 senses a touch applied to one region outputting the third handwriting window 240, as a handwriting input.

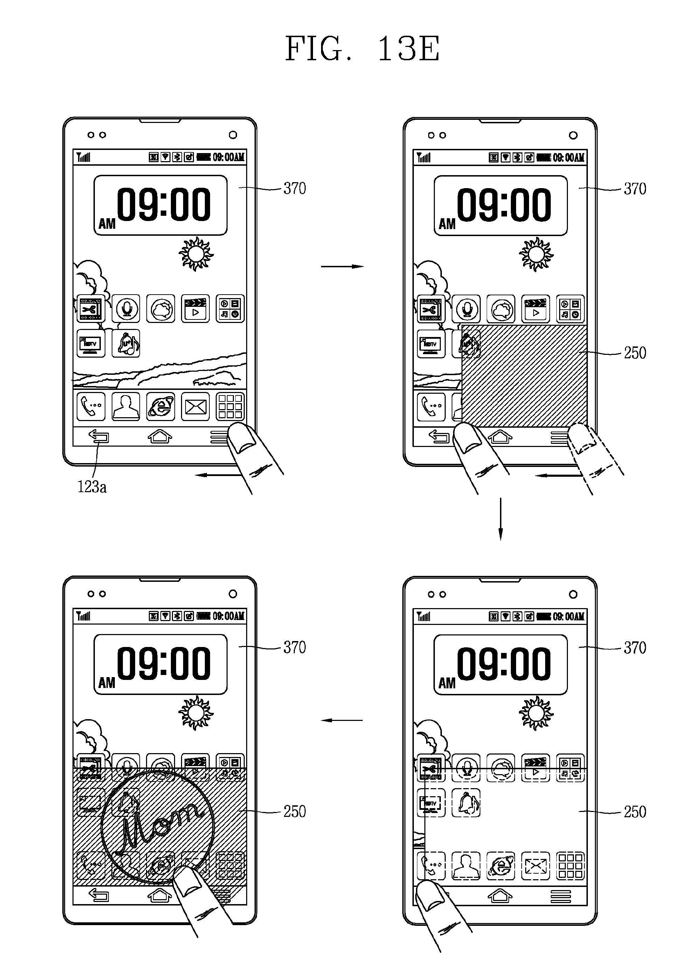

Referring to FIG. 13E, while the home screen page 370 is being output, the controller 180, based on a touch input applied to one region of the terminal body in which first manipulation units 123a are formed, controls the display unit 151 to output the fourth handwriting window 250.

The mobile terminal includes a bezel part formed to surround the display unit 151, and the plurality of manipulation units 123a are formed to be spaced from one another in the bezel part. In addition, a touch sensor for receiving a user's continuous touch input may be formed in one region of the terminal body.

Alternatively, the first manipulation units 123a may be output on the display unit 151. When the first manipulation units 123a are formed as a manipulation region including a plurality of graphic images arranged in a row, the controller 180, based on a continuous touch input applied to the manipulation region, may control the display unit 151 to output the fourth handwriting window 250.

Hereinafter, for the purposes of description, the bezel part in which the first manipulation units 123a are formed and the display region of the graphic image output on the display unit 151 will be referred to as a manipulation region. Based on a touch range of a touch input applied to the manipulation region, the controller 180 determines a size of the fourth handwriting window 250. That is, the controller 180 senses a point at which the touch input started and a point at which the touch input was released, and outputs the fourth handwriting window 250.

The fourth handwriting window 250 may be output to overlap one region of the home screen page 370, and the controller 180 senses a touch applied to the fourth handwriting window 250, as a handwriting input. A control method of outputting a fifth handwriting window 260 to the home screen page 370 will be described. When a continuous touch input is applied to the home screen page 370, the controller 180 can sense the touch input as a handwriting input. However, in order to differentiate the continuous touch input from a control command corresponding to a shift of the home screen page, a touch input in a particular direction may be excluded.

When the handwriting input is sensed, the controller 180 outputs the fifth handwriting window 260 such that it overlaps the home screen page 370. All of touch inputs applied to the fifth handwriting window 260 are sensed as handwriting inputs. Accordingly, the controller 180 can extract a word based on the handwriting input applied to the fifth handwriting window 260, and execute an application using related data. Based on execution of the application, the controller 180 controls the display unit 151 to switch the home screen page 370 to a call origination screen 310.

According to the present embodiment, the controller 180 recognizes a user's touch corresponding to a handwriting input and applies the handwriting input without a separate control command for forming a handwriting window.

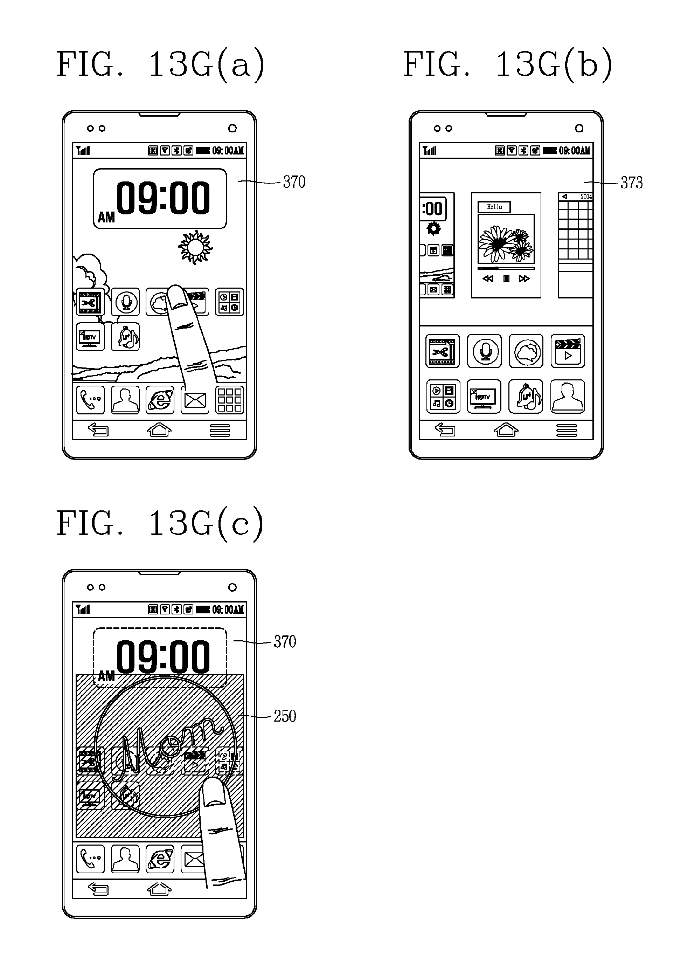

A control method of outputting a sixth handwriting window 250 to a home screen page based on differentiated touch inputs will be described with reference to FIG. 13G. Referring to (a) and (b) of FIG. 13G, based on a first touch input applied to the other remaining region to which content items are not output in the home screen page 370, the controller 180 controls the display unit 151 to output a second editing screen 373. The second editing screen 373 may include at least one home screen page and content items to be added to the home screen page. Here, the first touch input may be a long touch type touch input applied for a pre-set time (about one second).

Referring to (a) and (c) of FIG. 13G, based on a second touch input applied to the other remaining region, the controller 180 can control the display unit 151 to output the sixth handwriting window 250. The second touch input may be differentiated from the first touch input, and the first touch input may be a type of touch input applied for a relatively short period of time. That is, the controller 180 can apply different types of touch inputs to the other remaining region in which the content items are not displayed, to output a handwriting window.

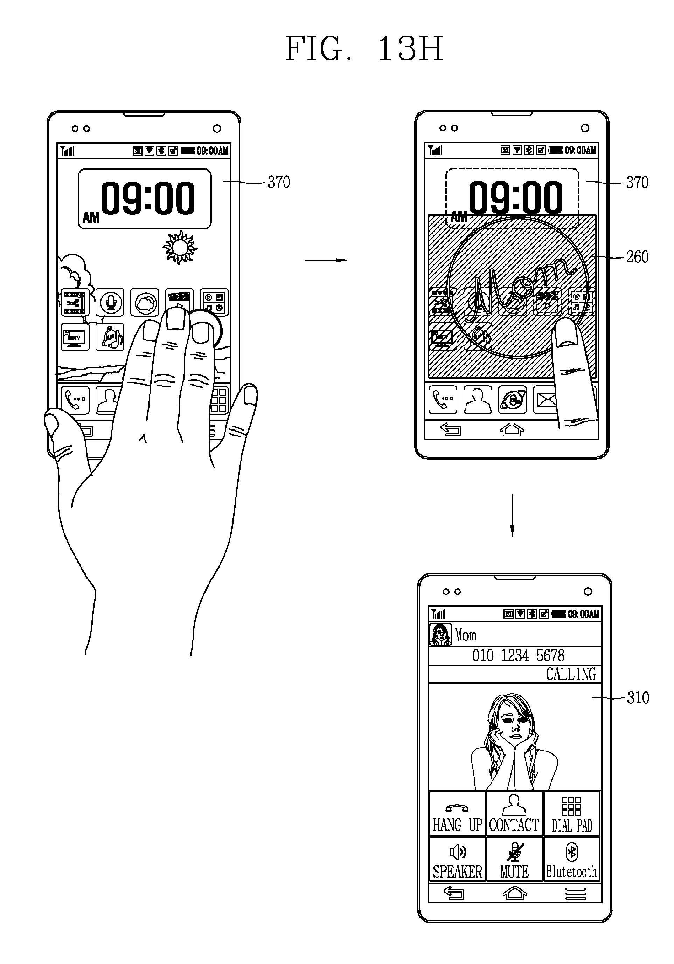

Referring to FIG. 13H, based on a touch input by a user's particular finger, the controller 180 controls the display unit 151 to output the sixth handwriting window 250. Referring to FIGS. 13H, the mobile terminal according to the present embodiment may include a fingerprint recognition sensor formed in a region corresponding to the display unit 151. For example, when a user's touch input is sensed in the other remaining region in which the content items are not output and a fingerprint of the user's ring finger is sensed, the controller 180 controls the display unit 151 to output the sixth handwriting window 250.

Here, the touch input may be a long touch type touch input to facilitate the fingerprint recognition. Based on a word based on a handwriting input applied to the sixth handwriting window 250 and related data, the controller 180 executes an application. For example, the controller 180 executes a call application and controls the display unit 151 to output the call origination screen 310. According to the present embodiment, differentiated from a control command for controlling the display unit 151 by using a plurality of differentiated fingers of the user, a handwriting window may be simply output.

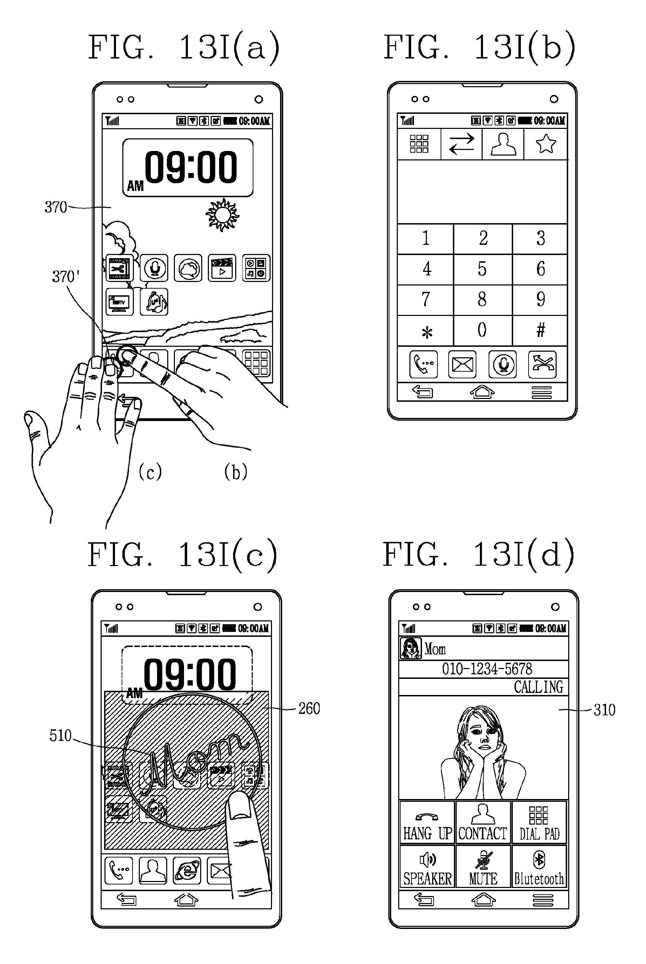

A control method of outputting a fifth handwriting window 260 based on a touch input applied to an icon will be described with reference to FIG. 13I. The home screen page 370 includes an icon 370' for executing an application. The mobile terminal according to the present embodiment includes a fingerprint recognition sensor for sensing a fingerprint of the user.

Referring to (a) and (b) of FIG. 13I, based on a third touch applied to the icon 370', the controller 180 executes the application and controls the display unit 151 to output an execution screen of the application. For example, the third touch input may correspond to a touch input applied by the user's index finger.

Referring to (a) and (c) of FIG. 13I, based on a fourth touch input applied to the icon, the controller 180 controls the display unit 151 to output the fifth output window 260. Here, the fourth touch input is differentiated from the third touch input, and the fourth touch input may correspond to a touch input applied by the user's ring finger. That is, when the touch input is applied, the controller 180 can sense a fingerprint of the finger based on the fingerprint recognition sensor, and execute an application or output an output window.

Based on a handwriting input applied to the fifth output window 260, the controller 180 executes an application corresponding to the icon 370'. Based on the handwriting input, the controller 180 controls the display unit 151 to output a word image 510 to the fifth output window 260.

When it is determined that the handwriting input has been terminated, for example, when the handwriting input is not applied for a pre-set period of time, the controller 180 drives the application. The controller 180 originates a call based on data related to the extracted word, and controls the display unit 151 to output the call origination screen 310 as shown in (d) of FIG. 13I.

That is, according to the present embodiment, a handwriting input for forming a pre-set pattern image to select an application to be executed is not necessary. Thus, the user can select an application to be executed by using the icon, and control the application through a handwriting input.

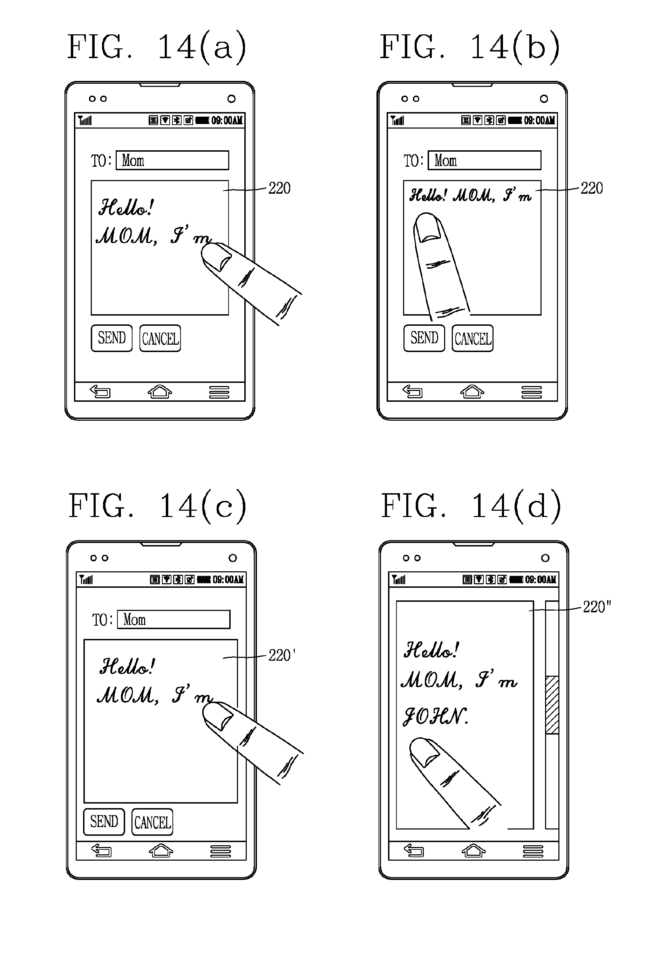

FIG. 14 is a conceptual view illustrating a control method of a handwriting window based on a handwriting input. Referring to (a) of FIG. 14, the display unit 151 outputs a first handwriting window 220 formed to sense a handwriting input. The display unit 151 outputs an image corresponding to the handwriting input.

Referring to (a) and (b) of FIG. 14, when the image greater than a pre-set region of the first handwriting window 220 is output, the controller 180 controls the display unit 151 to reduce the size of the image and output the same. The controller 180 controls the display unit 151 to reduce the handwriting image itself and change an output position to output the same. Accordingly, the user can be provided with an extended region to which a handwriting input is to be applied on the first handwriting window 220.

Although an embodiment in which the image is reduced as it is and output is illustrated, but the controller 180 can control the display unit 151 to change the image to a printed word and output the same. Referring to (a), (c), and (d) of FIG. 14, based on the output image, the controller 180 controls the display unit 151 to change a size of the first output window 220.

When an image greater than the pre-set region of the first output window 220 having a first size is output, the controller 180 controls the display unit 151 to output a first output window 220' having a second size. The second size is greater than the first size. As the first output window 220' is output, output positions of other screen information output on the display unit 151 can be changed.

Meanwhile, when the first output window 220" having a third size greater than the second size is output, the controller 180 can control the display unit 151 to limit output of the other screen information. Also, the controller 180 can control the display unit 151 to further output a scroll bar for receiving a control command to provide the other screen information. Thus, the user can input a large amount of words through the handwriting input.

According to embodiments of the present invention, searching for data, selecting of an application and driving of an application to which data is applied can be controlled through a handwriting input applied to the display unit. Thus, the selected application can be simply driven by using the data, and thus, the user can omit complicated processes for driving the application.

Also, by outputting a handwriting window to which a handwriting input can be applied based on an activation state of a display unit, a problem of collision with other control command applied to the display unit to execute a particular function can be solved. According to embodiments of the present invention, searching for data, selecting of an application and driving of an application to which data is applied can be controlled through a handwriting input applied to the display unit. Thus, the selected application can be simply driven by using the data, and thus, the user can omit complicated processes for driving the application.

Also, by outputting a handwriting window to which a handwriting input can be applied based on an activation state of a display unit, a problem of collision with other control command applied to the display unit to execute a particular function can be solved.

The foregoing embodiments and advantages are merely and are not to be considered as limiting the present invention. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the embodiments described herein may be combined in various ways to obtain additional and/or alternative embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a wireless communication unit configured to provide wireless communication;
a display unit; and
a controller configured to:
display a handwriting region on the display unit for receiving handwriting,
search for data corresponding to the handwriting input in the handwriting region, and
execute a corresponding application on the mobile terminal corresponding to the searched data.

2. The mobile terminal of claim 1, wherein the handwriting includes a first touch input writing a word and a second touch input forming a pattern for executing the corresponding application.

3. The mobile terminal of claim 2, wherein the pattern has a closed loop, and
wherein when a distance between starting and releasing points of the second touch input is smaller than a pre-set distance, the controller is further configured to execute the corresponding application.

4. The mobile terminal of one of any claims 1 to 3, wherein the controller is further configured to display an execution screen of the corresponding application on the display unit,
wherein the execution screen includes an address list and a search window for inputting search information for searching the address list, and
wherein in response to a first touch input applied to the search window, the controller is further configured to display the handwriting region for receiving the handwriting corresponding to the search information.

5. The mobile terminal of claim 4, wherein the controller is further configured to display a first icon for executing the corresponding application using the written handwriting.

6. The mobile terminal of claim 4, wherein when sufficient data corresponding to the written handwriting is not found, the controller is further configured to display an icon for storing additional information corresponding to the written handwriting.

7. The mobile terminal of claim 2, wherein the controller is further configured to receive the handwriting in the handwriting region while the display unit is deactivated.

8. The mobile terminal of claim 7, wherein the controller is further configured to:
display a pop-up window on the display unit including received event information, and
display options for acknowledging the event information based on a tapping of the display unit and a preset pattern being drawn on the handwriting region.

9. The mobile terminal of claim 2, wherein the controller is further configured to:
display a home screen page including at least one icon and a pre-set background image, and
display the background image without the at least one icon and display the handwriting region on the background image for receiving the handwriting, in response to a predetermined touch input on the display unit.

10. The mobile terminal of claim 2, wherein the controller is further configured to:
display an editing screen for editing home screen pages, and
display the handwriting region on at least a portion of the editing screen for receiving the handwriting.

11. The mobile terminal of claim 1, further comprising:
at least one of a haptic module configured to generate vibrations and a light output unit configured to emit light in order to inform that touch input has been applied to the display unit,
wherein the controller is further configured to maintain the display unit in a deactivated state, while sensing the touch input.

12. The mobile terminal of claim 2, wherein the controller is further configured to adjust a size of the handwriting region for receiving the handwriting based on the written word.

13. A method of controlling a mobile terminal, the method comprising:
inputting handwriting on a handwriting region of a display unit;
searching for data corresponding to the input handwriting in the handwriting region; and
executing a corresponding application on the mobile terminal corresponding to the searched data.

14. The method of claim 13, wherein the handwriting includes a first touch input writing a word and a second touch input forming a pattern for executing the corresponding application.

15. The method of claim 14, wherein the pattern has a closed loop, and
wherein when a distance between starting and releasing points of the second touch input is smaller than a pre-set distance, the executing step executes the corresponding application.
